# EUROPÄISCHE PATENTSCHRIFT

(11) **EP 3 977 706 B1**
(45) Veröffentlichungstag und Bekanntmachung des Hinweises auf die Patenterteilung: **03.12.2025**
(21) Anmeldenummer: 20723900.5
(22) Anmeldetag: 12.05.2020
(51) Int. Cl.: H04L 67/12, H04L 67/55

(54) **UNTERWASSERVORRICHTUNG ZUR BILDAUFNAHME EINES WASSERBODENS**
UNDERWATER DEVICE FOR ACQUIRING IMAGES OF A WATER BOTTOM
DISPOSITIF SOUS-MARIN POUR LA PRISE DE VUES D'UN FOND AQUATIQUE

(30) Priorität: 28.05.2019 LU 101240
(43) Veröffentlichungstag der Anmeldung: 06.04.2022
(73) Patentinhaber: Planblue GmbH, 28359 Bremen (DE)
(72) Erfinder: KANDUKURI, Raja, 28359 Bremen (DE); RIGOT, Guy, 28359 Bremen (DE)
(74) Vertreter: Grabovac, Dalibor
(86) Internationale Anmeldenummer: PCT/EP2020/063173
(87) Internationale Veröffentlichungsnummer: WO 2020/239431

(56) Entgegenhaltungen:
- US-A1- 2007 162 678
- US-A1- 2018 232 959
- ARJUN CHENNU ET AL: "A diver-operated hyperspectral imaging and topographic surveying system for automated mapping of benthic habitats", SCIENTIFIC REPORTS, vol. 7, no. 1, 2 August 2017 (2017-08-02), XP055660413, DOI: 10.1038/s41598-017-07337-y
- ANONYMOUS: "Symmetric multiprocessing - Wikipedia", 2 May 2019 (2019-05-02), XP055713611, Retrieved from the Internet <URL:https://en.wikipedia.org/w/index.php?title=Symmetric_multiprocessing&oldid=895110125> [retrieved on 20200710]
- ANONYMOUS: "Multi-core processor - Wikipedia", 4 May 2019 (2019-05-04), XP055713616, Retrieved from the Internet <URL:https://en.wikipedia.org/w/index.php?title=Multi-core_processor&oldid=895500103> [retrieved on 20200710]
- ANONYMOUS: "Processor affinity - Wikipedia", 28 April 2018 (2018-04-28), XP055513315, Retrieved from the Internet <URL:https://en.wikipedia.org/w/index.php?title=Processor_affinity&oldid=777669221> [retrieved on 20181008]

## Beschreibung

Die Erfindung betrifft eine Unterwasservorrichtung zur Bildaufnahme eines Wasserbodens mit mehreren Funktionseinheiten, einem Steuerprogramm zum Steuern einer elektrischen Funktionseinheit, einem anderen Steuerprogramm zum Steuern einer anderen elektrischen Funktionseinheit und wenigstens einer Steuervorrichtung.

Es besteht sowohl aus ökonomischer als auch aus ökologischer Sicht ein Bedarf, Meeres- und Süßwasserökosysteme zu überwachen. Dabei ist eine Herausforderung bei der Überwachung der Ökosysteme, dass einerseits eine feine räumliche Auflösung benötigt wird, um die hohe Vielfalt der Organismen in ausreichender Genauigkeit zu erfassen, und andererseits eine große Fläche untersucht werden muss.

Aus dem Stand der Technik sind Unterwasservorrichtungen bekannt, die eine Kamera aufweisen und mittels denen Bilder vom Wasserboden aufgenommen werden. Bei Unterwasservorrichtungen ist die zu verarbeitende Datenmenge sehr groß. Insbesondere werden durch Sensoren der Unterwasservorrichtung kontinuierlich Daten erfasst, die durch weitere Komponenten der Unterwasservorrichtung verarbeitet werden. Darüber hinaus werden Bilder des Wasserbodens aufgenommen, was ebenfalls zu einer großen zu verarbeitenden Datenmenge führt. Problematisch ist, dass aufgrund der großen Datenmenge die Verarbeitung der Daten und dementsprechend die Untersuchung des Wasserbodens lange dauert.

Außerdem kann sich je nach Einsatzzweck und/oder Einsatzort der Unterwasservorrichtung die Menge der zu verarbeitenden Daten und/oder die benötigte Rechenleistung erhöhen. Dies kann daraus resultieren, dass weitere Sensoren angeschlossen werden und/oder aufgrund anderer Datenverarbeitungsverfahren mehr Rechenleistung benötigt wird.

Arjun Chennu Et Al "A diver operated hyperspectral imaging and topographicsurveying system for autmated mapping of benthic habitats", Scientific Reports, Bd. 7, Nr. 1, 2. August 2017 (2017-08-02), XP055660413, DOl: 10.1038/s41598-017-07337-y offenbart eine Unterwasservorrichtung, mittels der Aufnahmen vom Unterwasserboden getätigt wurden. Dazu weist die Unterwasservorrichtung unter anderem eine Hyperspektralkamera, Sensoren und einen Computer auf.

Eine Aufgabe der Erfindung besteht daher darin, eine Unterwasservorrichtung anzugeben, mittels der der Wasserboden schneller untersucht werden kann.

Die Aufgabe wird durch eine Unterwasservorrichtung der eingangs genannten Art gelöst, die dadurch gekennzeichnet ist, dass die Unterwasservorrichtung einen Datenbus aufweist, der derart eingerichtet ist, dass eine Steuervorrichtung und eine andere Steuervorrichtung, die als separate Baueinheiten ausgebildet sind und die nicht dieselbe Platine aufweisen, separat voneinander an den Datenbus anschließbar sind, und dass die Unterwasservorrichtung derart ausgeführt ist, dass wahlweise das Steuerprogramm und das andere Steuerprogramm auf derselben Steuervorrichtung ausführbar sind oder das Steuerprogramm auf einer Steuervorrichtung und das andere Steuerprogramm auf einer anderen Steuervorrichtung ausführbar ist.

Die erfindungsgemäße Unterwasservorrichtung weist den Vorteil auf, dass durch Ausführen der Steuerprogramme auf derselben Steuervorrichtung oder auf unterschiedlichen Steuervorrichtungen flexibel auf die zu verarbeitende Datenmenge reagiert werden kann. So können die Steuerprogramme auf derselben Steuervorrichtung ausgeführt werden, wenn die zu verarbeitende Datenmenge durch eine Steuervorrichtung handhabbar ist. Im Gegensatz zu den aus dem Stand der Technik bekannten Unterwasservorrichtungen, bei denen nur eine einzige Steuervorrichtung vorhanden ist, können bei der erfindungsgemäßen Ausführung die Steuerprogramme auf unterschiedlichen Steuervorrichtungen ausgeführt werden, wenn die zu verarbeitende Datenmenge für eine einzige Steuervorrichtung zu hoch ist und somit die benötigte Zeit zur Datenverarbeitung zu lang ist.

Im Ergebnis kann der Benutzer flexibel auf den jeweiligen Einsatzort und Einsatzzweck der Unterwasservorrichtung reagieren und eine Unterwasservorrichtung mit einer einzigen Steuervorrichtung oder mehreren Steuervorrichtungen vorsehen. Dies ist möglich, weil die elektrischen Funktionseinheiten ihre Funktion erfüllen können, unabhängig davon, auf welcher Steuervorrichtung ihr Steuerprogramm ausgeführt wird.

Im Ergebnis kann die Unterwasservorrichtung je nach Bedarf mit weiteren Steuervorrichtungen nachgerüstet werden. Dies ist möglich, weil bei der Unterwasservorrichtung aufgrund des nachstehend näher beschriebenen Aufbaus es jederzeit möglich ist, eine oder mehrere Steuervorrichtungen anzuschließen. Dabei ist es irrelevant, ob die Unterwasservorrichtung vor dem Anschließen der weiteren Steuervorrichtung bzw. Steuervorrichtung bereits eine einzige Steuervorrichtung oder mehrere Steuervorrichtung aufweist. Dies unterscheidet die Unterwasservorrichtungen von den bekannten Steuervorrichtungen, bei denen ein derartiger Anschluss von weiteren Steuervorrichtungen nicht möglich ist. Insbesondere hängt bei den bekannten Unterwasservorrichtungen die Rechnerkapazität von der verwendeten Steuervorrichtung ab. Im Gegensatz dazu kann die Rechnerkapazität bei der erfindungsgemäßen Unterwasservorrichtung an den entsprechenden Einsatzort und/oder Einsatzzweck angepasst werden.

Dies ist, wie oben schon beschrieben wurde, durch eine Unterwasservorrichtung zur Bildaufnahme eines Wasserbodens mit mehreren Funktionseinheiten, einem Steuerprogramm zum Steuern einer elektrischen Funktionseinheit, einem anderen Steuerprogramm zum Steuern einer anderen elektrischen Funktionseinheit möglich, die dadurch gekennzeichnet ist, dass die Unterwasservorrichtung derart ausgeführt ist, dass wahlweise das Steuerprogramm und das andere Steuerprogramm auf derselben Steuervorrichtung ausführbar sind oder das Steuerprogramm auf einer Steuervorrichtung und das andere Steuerprogramm auf einer anderen Steuervorrichtung ausführbar ist.

Eine elektrische Funktionseinheit ist ein Bauteil oder eine Baueinheit der Unterwasservorrichtung, die eine technische Funktion der Unterwasservorrichtung realisiert. So kann, wie nachstehend näher beschrieben wird, die technische Funktion in der Bildaufnahme des Wasserbodens und/oder der Positionsbestimmung der Unterwasservorrichtung und/oder der Erfassung von Sensorwerten liegen.

Das Steuerprogramm ist ein Computerprogramm, mittels dem die jeweilige elektrische Funktionseinheit gesteuert wird, um deren technische Funktion zu realisieren. Die Steuervorrichtung und die andere Steuervorrichtung können innerhalb eines durch ein Gehäuse der Unterwasservorrichtung angeordneten Hohlraums angeordnet sein.

Beim Betrieb kann die Unterwasservorrichtung teilweise oder vollständig im Wasser angeordnet sein. Zur Untersuchung des Wasserbodens bietet es sich an, dass die Unterwasservorrichtung vollständig in das Wasser eintaucht. Die Unterwasservorrichtung kann zur Untersuchung von Meeres- und Süßwasserökosysteme eingesetzt werden.

Bei einer besonderen Ausführung können die elektrischen Funktionseinheiten der Unterwasservorrichtung unter Verwendung eines nachrichtenbasierten Kommunikationsprotokolls miteinander kommunizieren. Insbesondere kann die elektrische Funktionseinheit unter Verwendung eines nachrichtenbasierten Kommunikationsprotokolls mit der anderen elektrischen Funktionseinheit kommunizieren.

Die Verwendung eines nachrichtenbasierten Kommunikationsprotokolls bietet den Vorteil, dass die elektrischen Funktionseinheiten die Adresse, insbesondere IP-Adresse, der anderen elektrischen Funktionseinheit nicht kennen müssen, um miteinander kommunizieren zu können. Dadurch ist es nicht notwendig, dass die elektrische Funktionseinheit und/oder die andere elektrische Funktionseinheit an einer fest vorgegebenen Anschlussschnittstelle an einen Datenbus angeschlossen wird, damit eine Kommunikation zwischen den elektrischen Funktionseinheiten erfolgen kann. Aufgrund der Verwendung des nachrichtenbasierten Kommunikationsprotokolls können bei der Unterwasservorrichtung die elektrische Funktionseinheit und/oder die andere elektrische Funktionseinheit an beliebigen Stellen der Unterwasservorrichtung an den Datenbus angeschlossen werden. So kann es bei einem Einbau von weiteren elektrischen Funktionseinheiten notwendig sein, die bereits vorhanden und an den Datenbus angeschlossenen Funktionseinheiten an eine andere Stelle der Unterwasservorrichtung zu platzieren, was bei der erfindungsgemäßen Unterwasservorrichtung problemlos möglich ist.

Ein weiterer Vorteil der Verwendung des nachrichtenbasierten Kommunikationsprotokolls ist, dass dadurch auf einfache Weise sichergestellt werden kann, dass die Steuervorrichtungen miteinander kommunizieren können. Insbesondere ist es nicht notwendig, dass die Steuervorrichtungen die IP-Adresse des Kommunikationspartners kennen müssen. Insofern besteht eine Flexibilität an welcher Steuervorrichtung welches Steuerprogramm ausgeführt wird und/oder es besteht eine Flexibilität hinsichtlich der Anzahl der Steuerprogramme, die an derselben Steuervorrichtung ausgeführt werden.

Ein Datenbus weist wenigstens eine Leitung auf, mittels der Daten zwischen den mit dem Datenbus verbundenen elektrischen Funktionseinheiten bidirektional ausgetauscht werden können. Dabei können mehrere elektrische Funktionseinheiten der Unterwasservorrichtung Daten über dieselben Datenleitungen des Datenbusses austauschen. Dies unterscheidet den erfindungsgemäßen Aufbau von einem Aufbau eines bekannten Rechners, bei dem die Steuervorrichtung über eine Point-to-Point Verbindung mit einer anderen Komponente, wie einem Sensor, verbunden ist. Bei dem Rechner können somit aufgrund der Point-to-Point Verbindung keine weiteren Komponenten über dieselbe Datenleitung wie die Steuervorrichtung und die andere Komponente kommunizieren. Darüber hinaus können bei der erfindungsgemäßen Unterwasservorrichtung je nach Bedarf weitere elektrische Funktionseinheiten, die beispielsweise Sensoren aufweisen, an den Datenbus angeschlossen werden. Im Ergebnis kann die Unterwasservorrichtung je nach Bedarf konfiguriert werden.

Die datentechnische Verbindung der elektrischen Funktionseinheiten mittels des Datenbusses bietet den Vorteil bietet, dass dadurch ein Netzwerk in der Unterwasservorrichtung realisiert werden kann, in dem je nach Bedarf eine oder mehrere Steuervorrichtungen zur Datenverarbeitung herangezogen werden kann. Dies ist insbesondere von Vorteil, wenn weitere Sensoren angeschlossen und/oder ein anderes zeitlich aufwändigeres Datenverarbeitungsverfahren durchgeführt werden soll. So kann im Netzwerk die Anzahl an Steuervorrichtungen hinzugezogen werden, die für eine schnelle Datenverarbeitung benötigt wird. Das Netzwerk kann ein Ethernet-Netzwerk sein.

Besonders vorteilhaft ist, wenn das bei der Datenkommunikation eingesetzte Kommunikationsprotokoll einen Veröffentlichen-/ Abonnieren Mechanismus aufweist. Insbesondere kann das bei der Datenkommunikation eingesetzte Kommunikationsprotokoll das Message Queue Telemetry Transport Protokoll (MQTT) umfassen. Dadurch wird auf einfache Weise sichergestellt, dass die elektrischen Funktionseinheiten der Unterwasservorrichtung die Adresse, insbesondere IP-Adresse, ihres Kommunikationspartners in der Unterwasservorrichtung nicht kennen müssen.

Das nachrichtenbasierte Kommunikationsprotokoll erlaubt, dass die elektrische Funktionseinheit und/oder die andere elektrische Funktionseinheit eine Information, die eine Meldung sein kann, in wenigstens einem Datenkanal veröffentlicht. Besonders vorteilhaft ist, wenn unterschiedliche Informationsarten, insbesondere Meldungsarten, wie Alarmmeldungen oder Handlungsmeldungen, in unterschiedlichen Datenkanälen veröffentlicht werden.

Darüber hinaus erlaubt das nachrichtenbasierte Kommunikationsprotokoll, dass die elektrische Funktionseinheit und/oder die andere elektrische Funktionseinheit eine Information, insbesondere eine Meldung, aus wenigstens einem Datenkanal empfängt.

Besonders vorteilhaft ist, wenn die Steuervorrichtung, insbesondere ein auf der Steuervorrichtung ausgeführtes Steuerprogramm, die Information der elektrischen Funktionseinheit und/oder der anderen elektrischen Funktionseinheit in dem Datenkanal veröffentlicht. Bei einer alternativen Ausführung der Unterwasservorrichtung kann die Steuervorrichtung, insbesondere ein auf der Steuervorrichtung ausgeführtes Steuerprogramm, die Information der elektrischen Funktionseinheit in dem Datenkanal veröffentlichen und die andere Steuervorrichtung, insbesondere ein auf der Steuervorrichtung ausgeführtes anderes Steuerprogramm, kann die Information der anderen elektrischen Funktionseinheit in dem Datenkanal veröffentlichen.

Darüber hinaus kann die Steuervorrichtung, insbesondere ein auf der Steuervorrichtung ausgeführtes Steuerprogramm, die Information der elektrischen Funktionseinheit und/oder der anderen elektrischen Funktionseinheit aus dem Datenkanal empfangen. Bei einer alternativen Ausführung kann die Steuervorrichtung, insbesondere ein auf der Steuervorrichtung ausgeführtes Steuerprogramm, die Information der elektrischen Funktionseinheit aus dem Datenkanal empfangen und die andere Steuervorrichtung, insbesondere ein auf der anderen Steuervorrichtung ausgeführtes anderes Steuerprogramm, kann die Information der anderen elektrischen Funktionseinheit aus dem Datenkanal empfangen.

So können beispielsweise von einer Sensoreinheit ermittelte Sensorwerte in den Datenkanal veröffentlichen werden. Die veröffentlichten Sensorwerte können von Funktionseinheiten empfangen werden, die den Datenkanal abonniert haben.

Die oben beschriebene Kommunikation kann besonders einfach realisiert werden, wenn die Unterwasservorrichtung eine Zentrale aufweist, die die in dem Datenkanal veröffentlichte Information, insbesondere Meldung, bzw. in den Datenkanälen veröffentlichten Meldungen verwaltet. Insbesondere kann die Zentrale die von der elektrischen Funktionseinheit und/oder die von der anderen elektrischen Funktionseinheit in dem Datenkanal veröffentlichten Meldungen verwalten.

Darüber hinaus kann die Zentrale derart ausgebildet sein, dass sie die in dem Datenkanal veröffentlichten Meldungen für ein Abgerufen-Werden zur Verfügung stellt. Das Abrufen der Meldungen kann durch Empfangsmittel erfolgen, die den Datenkanal abonniert haben. Dabei kann die Steuervorrichtung und die andere Steuervorrichtung jeweils ein Empfangsmittel aufweisen. Die Steuervorrichtung und die andere Steuervorrichtung können unterschiedliche Datenkanäle abonniert haben. Außerdem kann die Steuervorrichtung oder die andere Steuervorrichtung die Zentrale aufweisen.

Bei einer besonderen Ausführung können die elektrische Funktionseinheit und die andere elektrische Funktionseinheit mit der Steuervorrichtung direkt datentechnisch verbunden sein, wenn das Steuerprogramm und das andere Steuerprogramm auf der Steuervorrichtung ausgeführt ist. Bei einer Ausführung bei der das Steuerprogramm auf der Steuervorrichtung und das andere Steuerprogramm auf der anderen Steuervorrichtung ausgeführt ist, kann die elektrische Funktionseinheit mit der Steuervorrichtung und die andere elektrische Funktionseinheit mit der anderen Steuervorrichtung jeweils direkt datentechnisch verbunden sein.

Die direkte Verbindung bedeutet, dass kein Gerät zwischen der elektrischen Funktionseinheit und der Steuervorrichtung angeordnet ist. Darüber hinaus kann das Steuerprogramm die jeweilige elektrische Funktionseinheit erst steuern, wenn die Steuervorrichtung mit der jeweiligen elektrischen Funktionseinheit verbunden ist. Der Benutzer der Unterwasservorrichtung kann zeitlich vor einer erstmaligen Inbetriebnahme der an die Steuervorrichtung anzuschließenden elektrischen Funktionseinheit das Steuerprogramm auf der Steuervorrichtung starten. Nach dem Start des Steuerprogramms erkennt dieses, wenn eine zugehörige elektrische Funktionseinheit an die Steuervorrichtung angeschlossen wird.

Die elektrische Funktionseinheit und/oder die andere Funktionseinheit können mittels einer Datenleitung mit der Steuervorrichtung direkt verbunden sein. Bei einer alternativen Ausführung kann die Funktionseinheit mittels einer Datenleitung direkt mit der anderen Steuervorrichtung verbunden sein. Die andere Funktionseinheit kann bei der alternativen Ausführung mittels einer Datenleitung direkt mit der anderen Steuervorrichtung datentechnisch verbunden sein. Die Datenleitung kann eine USB-Leitung sein. Alternativ können die elektrische Funktionseinheit und die andere Funktionseinheit mit der Steuervorrichtung bzw. der anderen Steuervorrichtung mittels TTL, RS232, I2C, etc. datentechnisch verbunden sein.

Die Steuervorrichtung und die andere Steuervorrichtung sind mittels eines Datenbusses datentechnisch miteinander verbunden. Im Ergebnis wird durch die Steuervorrichtung und die andere Steuervorrichtung auf einfache Weise ein Netzwerk gebildet, in dem Daten ausgetauscht werden können. Die Steuervorrichtung und/oder die andere Steuervorrichtung können jeweils einen Prozessor aufweisen. Dabei sind die Steuervorrichtung und die andere Steuervorrichtung als separate Baueinheiten ausgebildet. Dies bedeutet, dass die Steuervorrichtung und die andere Steuervorrichtung separat voneinander an den Datenbus angeschlossen werden und nicht dieselbe Platine aufweisen. Die Steuervorrichtung und/oder die andere Steuervorrichtung kann jeweils wenigstens einen Prozessor aufweisen.

Die datentechnische Verbindung kann durch eine Steckverbindung realisiert werden. So kann die Steuervorrichtung mittels einer Steckverbindung mit der anderen Steuervorrichtung und/oder dem Datenbus datentechnisch verbunden sein. Darüber hinaus kann die elektrische Funktionseinheit und/oder die andere elektrische Funktionseinheit mittels einer Steckverbindung mit der Steuervorrichtung bzw. der anderen Steuervorrichtung verbunden sein.

Die datentechnische Verbindung kann wieder lösbar ausgeführt sein. Dies ist vorteilhaft, weil eine defekte Steuervorrichtung und/oder Funktionseinheit und/oder andere Funktionseinheit auf einfache Weise ausgetauscht werden können.

Die Steuervorrichtung und/oder die andere Steuervorrichtung können an einer beliebigen Anschlussschnittstelle der Unterwasservorrichtung mit dem Datenbus verbunden werden, ohne dass dies einen negativen Einfluss auf die Kommunikation der elektrischen Funktionseinheit und/oder der anderen Funktionseinheit hat. Besonders vorteilhaft ist, wenn ein Switch vorhanden ist, der mehrere Anschlussschnittstellen aufweist. Bei diesem Fall kann die Steuervorrichtung und/oder die andere Steuervorrichtung mittels des Switches an das Netzwerk der Unterwasservorrichtung angeschlossen werden.

Bei einer besonderen Ausführung kann eine elektrische Funktionseinheit eine, insbesondere modular ausgebildete, Bilderfassungseinheit sein. Die Bilderfassungseinheit kann eine Hyperspektralkamera aufweisen. Darüber hinaus kann die Bilderfassungseinheit eine Farbkamera, insbesondere eine RGB-Kamera, aufweisen. Sowohl mit der Farbkamera als auch mit der Hyperspektralkamera wird eine Bildaufnahme des Wasserbodens erzeugt. Dabei fungieren die Hyperspektralkamera und die Referenzkamera jeweils als Datenerfassungseinheit.

Eine Hyperspektralkamera ist eine Kamera, die multispektrale Daten in sehr engen Spektralbändern des sichtbaren Lichts, des nahen und mittleren Infrarots aufzeichnen. Hyperspektralkameras ermöglichen somit eine hohe spektrale Auflösung der objektspezifischen Signaturen in mehr als 15, generell jedoch in 30-200 aneinandergrenzenden Kanälen und ermöglichen somit die Dokumentation eines nahezu kontinuierlichen Spektrums für jedes Bildelement.

Die Farbkamera, insbesondere RGB-Kamera, ist keine Hyperspektralkamera. Die Farbkamera unterscheidet sich von der Hyperspektralkamera darin, dass sie weniger Kanäle, insbesondere genau drei Kanäle, als die Hyperspektralkamera aufweist. Dementsprechend kann bei einer Farbkamera das betrachtete Objekt nicht so hoch spektral aufgelöst werden wie bei einer Hyperspektralkamera.

Die Unterwasservorrichtung kann basierend auf den aufgenommenen Bildern den Wasserboden kartieren. Dabei ist bei der erfindungsgemäßen Unterwasservorrichtung im Vergleich zu den bisherigen Unterwasservorrichtungen eine sehr genaue Untersuchung des Wasserbodens möglich.

Die Bilderfassungseinheit kann, insbesondere mittels der Datenleitung, direkt mit der Steuervorrichtung oder der anderen Steuervorrichtung datentechnisch verbunden sein.

Bei einer besonderen Ausführung kann eine elektrische Funktionseinheit eine, insbesondere modular ausgebildete, Positionsbestimmungseinheit zum Bestimmen einer Position der Unterwasservorrichtung sein. Die Positionsbestimmungseinheit kann Positionsbestimmungsmittel aufweisen, die zur Bestimmung der Istposition der Unterwasservorrichtung Daten erfassen und somit als Datenerfassungseinheit fungieren.

Die Positionsbestimmungseinheit kann, insbesondere mittels der Datenleitung, direkt mit der Steuervorrichtung oder der anderen Steuervorrichtung datentechnisch verbunden sein.

Darüber hinaus kann eine elektrische Funktionseinheit eine, insbesondere modular ausgebildete, Sensoreinheit sein, die wenigstens einen Sensor aufweist. Die Positionsbestimmungseinheit und die Sensoreinheit können untereinander in der oben beschriebenen Art und Weise kommunizieren. Zusätzlich können sie auch mit der Bilderfassungseinheit in der oben beschriebenen Art und Weise kommunizieren. Die Sensoreinheit kann, insbesondere mittels der Datenleitung, direkt mit der Steuervorrichtung datentechnisch verbunden sein.

Die modulare Ausbildung der einzelnen Komponenten der Unterwasservorrichtung bietet den Vorteil, dass die einzelnen Komponenten auf einfache Weise ein- und ausgebaut werden können. Insbesondere können die jeweiligen Komponenten aufgrund der modularen Bauweise als Ganzes ein- oder ausgebaut werden.

Alternativ kann die Sensoreinheit, insbesondere mittels der Datenleitung, direkt mit der anderen Steuervorrichtung datentechnisch verbunden sein. Bei dieser Ausführung kann der Sensor mit der anderen Steuervorrichtung direkt datentechnisch verbunden sein.

Die andere Steuervorrichtung kann die von den Sensoren der Steuereinheit erfassten Daten verarbeiten. Darüber hinaus kann die andere Steuervorrichtung Rechenvorgänge für andere Komponenten der Unterwasservorrichtung durchführen. Eine modular ausgebildete Sensoreinheit weist den Vorteil auf, dass sie einfach eingebaut oder ausgebaut werden kann. So können alle Komponenten der Sensoreinheit gemeinsam in die Unterwasservorrichtung eingebaut bzw. aus dieser ausgebaut werden.

Die Unterwasservorrichtung kann eine elektrische Energiequelle zum Versorgen der elektrischen Funktionseinheiten mit elektrischer Energie aufweisen. Die elektrische Energiequelle kann eine Vielzahl von Batterien aufweisen und/oder modular ausgebildet sein. Die modulare Ausbildung weist den Vorteil auf, dass die Energiequelle auf einfache Weise ausgetauscht werden kann. Dabei kann die Energiequelle wieder lösbar mit einem Gehäuse der Unterwasservorrichtung verbunden sein. Insbesondere kann die Energiequelle an und/oder in dem Gehäuse angebracht sein. Die Verbindung kann mechanisch und/oder elektrisch erfolgen. Dabei kann die Energiequelle unmittelbar mit dem Gehäuse formschlüssig und/oder kraftschlüssig verbunden sein. Insbesondere kann somit auf vorteilhafte Weise verhindert werden, dass die elektrischen Verbraucher der Unterwasservorrichtung über ein von der Unterwasservorrichtung zu beispielsweise einem Schiff gehendes Stromkabel mit elektrischer Energie versorgt werden. Im Ergebnis ist durch die integrierte Anordnung der Energiequelle an und/oder in dem Gehäuse eine einfache Manövrierbarkeit der Unterwasservorrichtung möglich und/oder die Unterwasservorrichtung ist kompakt ausgebildet.

Die elektrische Energiequelle kann eine Batteriesteuervorrichtung zum Überwachen des Batteriezustands aufweisen. Dadurch können auf einfache Weise defekte Batterien identifiziert werden. Darüber hinaus kann die elektrische Energiequelle eine Kühleinrichtung zum Kühlen der Batteriesteuervorrichtung und/oder Batteriesensoren aufweisen. Mittels der Batteriesensoren kann die Batterietemperatur gemessen werden.

Bei einer besonderen Ausführung kann eine elektrische Funktionseinheit eine elektrische Anzeigeeinrichtung sein. Die Positionsbestimmungseinheit, die Sensoreinheit und die elektrische Anzeigeeinrichtung können untereinander in der oben beschriebenen Art und Weise kommunizieren. Zusätzlich können sie auch mit der Bilderfassungseinheit in der oben beschriebenen Art und Weise kommunizieren. Die elektrische Anzeigeeinrichtung kann, insbesondere mittels der Datenleitung, direkt mit der Steuervorrichtung datentechnisch verbunden sein.

Die elektrische Anzeigeeinrichtung kann eine Bildschirmanzeige aufweisen und bietet den Vorteil, dass dem Taucher ein Betriebszustand der Unterwasservorrichtung und/oder Bildaufnahmen des Wasserbodens auf einfache Weise visuell dargestellt werden können.

Bei einer besonderen Ausführung kann eine elektrische Funktionseinheit eine Energieverteileinheit zum Verteilen der elektrischen Energie zwischen der elektrischen Energiequelle und wenigstens einem elektrischen Verbraucher sein. Die Positionsbestimmungseinheit, die Sensoreinheit, die elektrische Anzeigeeinrichtung und die Energieverteileinheit können untereinander in der oben beschriebenen Art und Weise kommunizieren. Zusätzlich können sie auch mit der Bilderfassungseinheit in der oben beschriebenen Art und Weise kommunizieren. Die Energieverteileinheit kann, insbesondere mittels der Datenleitung, direkt mit der Steuervorrichtung oder der anderen Steuervorrichtung datentechnisch verbunden sein.

Die andere Steuervorrichtung kann mittels des Datenbusses mit dem Switch datentechnisch verbunden sein. Der Switch kann zusätzlich mittels des Datenbusses mit der Steuervorrichtung datentechnisch verbunden sein. Weitere elektrische Funktionseinheiten können auf einfache Weise mittels im Switch vorhanden Anschlussschnittstellen an den Datenbus angeschlossen werden.

Elektrische Verbraucher sind Bestandteile der Unterwasservorrichtung, die Elektronikbauteile aufweisen und somit beschädigt werden können, wenn sie in Kontakt mit Wasser gelangen und/oder die Luftfeuchtigkeit der sie umgebenden Luft zu hoch ist. So weisen die elektrische Funktionseinheit und die andere elektrische Funktionseinheit elektrische Verbraucher auf.

Die Energieverteileinheit kann wenigstens einen anderen Sensor aufweisen, der mit der anderen Steuervorrichtung datentechnisch verbunden ist. Mittels des anderen Sensors können der dem elektrischen Verbraucher zugeführte Strom oder die an einer elektrischen Energiequelle oder an dem elektrischen Verbraucher anliegende Spannung ermittelt werden.

Alternativ können mittels des Sensors der Sensoreinheit und/oder des anderen Sensors der Energieverteileinheit eine Temperatur oder eine Feuchtigkeit oder ein Druck innerhalb eines Hohlraums der Unterwasservorrichtung ermittelt werden. Bei einer Unterwasservorrichtung, die mehrere Sensoren und/oder mehrere andere Sensoren aufweist, können mittels der Sensoren und/oder der anderen Sensoren der Strom und/oder die Temperatur und/oder die Feuchtigkeit und/oder der Druck gemessen werden.

Dabei kann basierend auf dem durch den Sensor und/oder dem durch den anderen Sensor erfassten Sensorwert ermittelt werden, ob ein Gefahrzustand für einen elektrischen Verbraucher vorliegt, und die Energieverteileinheit kann den elektrischen Verbraucher von der elektrischen Energiequelle trennen, wenn ein Gefahrzustand vorliegt. Dies weist den Vorteil auf, dass aktiv geprüft wird, ob ein Gefahrzustand vorliegt, bei dem ein elektrischer Verbraucher beschädigt werden kann. Die Ermittlung, ob ein Gefahrzustand vorliegt, kann durch die Steuervorrichtung oder die andere Steuervorrichtung erfolgen, die mit der Energieverteileinheit mittels der Datenleitung direkt datentechnisch verbunden ist.

Für den Fall, dass ermittelt wird, dass ein Gefahrzustand vorliegt, kann eine Beschädigung des elektrischen Verbrauchers dadurch verhindert werden, dass die Energieverteilereinheit die elektrische Verbindung zwischen der elektrischen Energiequelle und dem elektrischen Verbraucher trennen. Auf diese Weise wird das Risiko reduziert, dass der elektrische Verbraucher beschädigt wird, wenn Wasser, beispielsweise aufgrund einer Unterdichtigkeit, in einen Hohlraum der Unterwasservorrichtung, in dem die elektrischen Verbraucher angeordnet sind, eintritt und/oder die Luftfeuchtigkeit in der Unterwasservorrichtung zu hoch ist.

Die Energieverteileinheit dient zum Verteilen der von der elektrischen Energiequelle bereitgestellten elektrischen Energie an die elektrischen Verbraucher. Dementsprechend wird durch die Energieverteileinheit die Energieversorgung des elektrischen Verbrauchers mit elektrischer Energie ermöglicht.

Die Energieverteilereinheit kann eine Schalteinrichtung aufweisen, mittels der die elektrische Verbindung zwischen der elektrischen Energiequelle und dem elektrischen Verbraucher trennbar ist. Dabei kann die Schalteinrichtung eine Vielzahl von Schaltern aufweisen, mittels denen die elektrischen Verbraucher separat und/oder unabhängig voneinander von der elektrischen Energiequelle getrennt werden können. Im Ergebnis kann die elektrische Verbindung zwischen der elektrischen Energiequelle und dem elektrischen Verbraucher auf einfache Weise durch die mit der Energieverteileinheit direkt verbundene andere Steuervorrichtung getrennt werden. Insbesondere kann durch die andere Steuervorrichtung die Schaltstellung des Schalters entsprechend gestellt werden, um eine elektrische Verbindung zwischen der elektrischen Energiequelle und dem elektrischen Verbraucher herzustellen oder zu trennen. Dabei kann die Anzahl der Schalter der Anzahl der elektrischen Verbraucher entsprechen.

Bei einer besonderen Ausführung kann die Energieverteileinheit eine Ausschaltmeldung erzeugen und die Ausschaltmeldung kann vor einem Trennen der elektrischen Verbindung zwischen der elektrischen Energiequelle und dem elektrischen Verbraucher an den elektrischen Verbraucher übermittelt werden. Dadurch kann ein abruptes Ausschalten des elektrischen Verbrauchers verhindert werden. Der elektrische Verbraucher hat somit noch Zeit, Vorkehrungen zu treffen, um beispielsweise einen Datenverlust zu vermeiden. So kann der elektrische Verbraucher nach Erhalt der Ausschaltmeldung veranlassen, dass die Bearbeitung gestoppt und Zwischenergebnisse gespeichert werden.

Vorteilhaft ist, wenn die Energieverteileinheit nach Übermitteln der Ausschaltmeldung eine vorgegebene Zeitdauer wartet, bevor die elektrische Verbindung zwischen der elektrischen Energiequelle und dem elektrischen Verbraucher getrennt wird. Wie zuvor erläutert wurde, kann somit dem elektrischen Verbraucher Zeit gegeben werden, um den Bearbeitungsvorgang abzuschließen und/oder die Zwischenergebnisse zu speichern.

Alternativ oder zusätzlich kann die Energieverteileinheit nach Übermitteln der Ausschaltmeldung auf eine Rückinformation von dem elektrischen Verbraucher warten, bevor die elektrische Verbindung zwischen der elektrischen Energiequelle und dem elektrischen Verbraucher getrennt wird. Bei diesem Fall wird sichergestellt, dass der Bearbeitungsvorgang abgeschlossen und/oder die Zwischenergebnisse gespeichert werden, weil erst nach Erhalt der Rückinformation die elektrische Verbindung zwischen der elektrischen Energiequelle und dem elektrischen Verbraucher getrennt wird.

Alternativ oder zusätzlich kann die Energieverteileinheit nach Übermitteln der Ausschaltmeldung warten, bis eine Stromstärke durch den elektrischen Verbraucher einen vorgegebenen Schwellwert unterschritten hat, bevor die elektrische Verbindung zwischen der elektrischen Energiequelle und den elektrischen Verbraucher getrennt wird. Durch Betrachten der Stromstärke kann die Energieverteilereinheit, insbesondere die Steuervorrichtung der Energieverteilereinheit, ermitteln, ob im elektrischen Verbraucher noch Bearbeitungsvorgänge ablaufen. Daher wird sichergestellt, dass die elektrische Trennung des elektrischen Verbrauchers von der elektrischen Energiequelle erst dann erfolgt, wenn der elektrische Verbraucher alle Bearbeitungsvorgänge abgeschlossen hat.

Die Steuervorrichtung oder die andere Steuervorrichtung kann den erfassten Sensorwert dahingehend untersuchen, ob ein Gefahrzustand besteht. Dabei kann die die andere Steuervorrichtung einen Gefahrzustand ermitteln, wenn der erfasste Sensorwert von einem vorgegebenen oder vorgebbaren Grenzwert abweicht oder außerhalb eines Grenzbereichs liegt. Insbesondere kann der erfasste Sensorwert oberhalb eines Grenzwerts und/oder außerhalb eines Grenzbereichs liegen, wenn der Gefahrzustand vorliegt. Dabei kann die Steuervorrichtung oder die andere Steuervorrichtung eine Alarmmeldung erzeugen, wenn ein Gefahrzustand besteht. Die Alarmmeldung kann in eine Warteschlange gesetzt werden und, wie nachfolgend näher beschrieben wird, im Rahmen eines Abarbeitungsvorgangs durch die Energieverteileinheit abgearbeitet werden.

Besonders einfach kann ein Gefahrzustand ermittelt werden, wenn mittels des Sensors und/oder des anderen Sensors der dem elektrischen Verbraucher zugeführte Strom oder die an der elektrischen Energiequelle oder an dem elektrischen Verbraucher anliegende Spannung ermittelt werden. Die Steuervorrichtung oder die andere Steuervorrichtung kann durch Betrachten des Stroms und/oder der Spannung rückschließen, ob ein Gefahrzustand besteht.

Dabei kann die Steuervorrichtung oder die andere Steuervorrichtung bewirken, dass Stromwerte jeweils für eine vorgegebene erste und eine vorgegebene zweite Zeitdauer erfasst werden. Dabei ist die zweite Zeitdauer länger als die erste Zeitdauer. Zum Bestimmen, ob der elektrische Verbraucher von der elektrischen Energiequelle getrennt werden soll, können die während der ersten Zeitdauer erfassten Stromwerte herangezogen werden.

Das Heranziehen der während der ersten Zeitdauer erfassten Stromwerte bietet den Vorteil, dass Abweichungen schneller erkannt und somit auf einen Gefahrzustand schneller rückgeschlossen werden kann als wenn auf die während der zweiten Zeitdauer erfassten Stromwerte abgestellt wird. Dagegen eignen sich die während der zweiten Zeitdauer erfassten Stromwerte für eine Auswertung besser als die während der ersten Zeitdauer erfassten Stromwerte.

Bei einer besonderen Ausführung kann die Unterwasservorrichtung eine Bedieneinheit aufweisen, die mit der Energieverteileinheit elektrisch verbunden ist. Mittels der Bedieneinheit kann der Taucher Befehle für die Unterwasservorrichtung eingeben. So kann durch ein Betätigen der Bedieneinheit die Energieverteileinheit veranlassen, das wahlweise die elektrische Verbindung zwischen dem elektrischen Verbraucher und der elektrischen Energiequelle hergestellt oder getrennt wird oder der elektrische Verbraucher und/oder die elektrische Anzeigeeinrichtung in einen Schlafmodus überführt werden oder der elektrische Verbraucher und/oder die elektrische Anzeigeeinrichtung in einen Energiesparmodus überführt werden. Der Taucher kann durch unterschiedlich langes Betätigen der Bedieneinheit den gewünschten Betriebszustand aus den zuvor genannten Betriebszustand der Unterwasservorrichtung auswählen.

Bei dem Schlafmodus werden die elektrischen Verbraucher nicht heruntergefahren, sondern in einen Zustand überführt, bei dem sie wenig elektrische Energie benötigen. Im Schlafmodus sind die elektrischen Verbraucher in einen Modus überführt, bei dem sie ihre technische Funktion nicht ausführen können, jedoch sind die elektrischen Verbraucher nicht ausgeschaltet. Dabei können die elektrischen Verbraucher aus dem Schlafmodus schneller in den Funktionsbetrieb überführt werden als aus dem ausgeschalteten Zustand. Der Schlafmodus bietet sich an, wenn mittels der Unterwasservorrichtung keine Bildaufnahmen des Wasserbodens getätigt werden sollen und beispielsweise die Unterwasservorrichtung von einer Position in eine andere Position überführt werden soll. Im Ergebnis kann aufgrund der Energieeinsparung in dem Schlafmodus die Einsatzzeit der Unterwasservorrichtung verlängert werden.

Bei dem Energiesparmodus wird der Verbrauch an elektrischer Energie des elektrischen Verbrauchers und/oder der elektrischen Anzeigeeinrichtung reduziert. So kann im Energiesparmodus die Helligkeit der elektrischen Anzeigeeinrichtung verringert werden. Im Ergebnis kann aufgrund der Energieeinsparung in dem Energiesparmodus die Einsatzzeit der Unterwasservorrichtung verlängert werden.

Die Bedieneinheit kann in die Anzeigeeinrichtung integriert sein. Dabei kann die Bedieneinheit Bedienknöpfe aufweisen, die an einem Gehäuse der Anzeigeeinrichtung angeordnet sind. Der Taucher kann somit die Befehle direkt über die Bedienknöpfe eingeben. Dies ist insofern von Vorteil, weil unter Wasser eine Eingabe von Befehlen schwerfällt und somit einfache Eingabemöglichkeiten benötigt werden.

Bei einem ermittelten Gefahrzustand kann die Energieverteileinheit die Anzeigeeinrichtung von der elektrischen Energiequelle elektrisch nicht trennen. Dies bietet den Vorteil, dass dem Taucher der Gefahrzustand unmittelbar angezeigt werden kann. Darüber hinaus können dem Taucher über die Anzeigeeinrichtung Empfehlungen für die nächsten Schritte, wie beispielsweise ein Auftauchen, gegeben werden, um eine Beschädigung der elektrischen Verbraucher der Unterwasservorrichtung zu verhindern. Alternativ ist es möglich, dass die Energieverteileinheit die Anzeigeeinrichtung von der elektrischen Energiequelle trennt, wenn ein Gefahrzustand vorliegt.

Bei einer besonderen Ausführung kann die Unterwasservorrichtung eine Beleuchtungseinrichtung, insbesondere eine LED-Anzeige, zum Anzeigen des Betriebszustands der Unterwasservorrichtung aufweisen. Die Beleuchtungseinrichtung kann wenigstens ein Beleuchtungsmittel, insbesondere eine LED, aufweisen. Die Beleuchtungseinrichtung ist vorteilhaft, weil unter Wasser die Sicht oftmals schlecht ist, sodass der Taucher durch die Beleuchtungseinrichtung über den Betriebszustand der Unterwasservorrichtung auf einfache Weise informiert werden kann. So kann der Betriebszustand durch unterschiedliche Farbgestaltung der LED und/oder Helligkeit und/oder durch Blinken auf einfache Weise angezeigt werden.

Die Energieverteileinheit kann unterschiedliche Aufgaben ausführen. Dabei können die einzelnen Aufgaben unterschiedlich priorisiert sein. Dies bedeutet, dass die Energieverteileinheit die Aufgaben mit höherer Priorisierung schneller abarbeitet als Aufgaben mit niedrigerer Priorisierung. Durch entsprechende Priorisierung kann somit sichergestellt werden, dass Alarmmeldungen durch die Energieverteileinheit schnell abgearbeitet werden.

Die Energieverteileinheit kann wahlweise eine Kommunikationsaufgabe oder eine Stromüberwachungsaufgabe oder eine Energiesteueraufgabe zum Steuern des Betriebszustands der Unterwasservorrichtung oder eine Abarbeitungsaufgabe zum Abarbeiten von Meldungen, insbesondere oder eine Signalisierungsaufgabe, ausführen. Im Folgenden werden die einzelnen Aufgaben näher beschrieben.

Durch Ausführen der Kommunikationsaufgabe wird ermöglicht, dass die Komponenten, wie beispielsweise elektrische Verbraucher, der Unterwasservorrichtung untereinander oder mit externen Geräten datentechnisch kommunizieren können. Insbesondere kann durch Ausführen der Kommunikationsaufgabe ermöglicht werden, dass die Energieverteilereinheit mit dem elektrischen Verbraucher datentechnisch kommunizieren kann. Dabei kann die Energieverteileinheit nach Erhalt einer Meldung auf die Meldung unmittelbar antworten, wie beispielsweise bei einer Anfrage nach der Uhrzeit, oder die Energieverteileinheit kann die Meldung zur Verarbeitung in eine Warteschlange stellen, die beim Ausführen der nachfolgend beschriebenen Abarbeitungsaufgabe abgearbeitet wird.

Die Kommunikation der Energieverteileinheit mit dem elektrischen Verbraucher erfolgt, wie bereits oben beschrieben wurde, dadurch, dass eine Meldung in einen Datenkanal veröffentlicht wird. Dies bedeutet, dass die Meldung für das Empfangsmittel oder alle Empfangsmittel zur Verfügung steht, die den Datenkanal abonniert haben. So kann die Energieverteileinheit die Meldung empfangen, wenn ein Empfangsmittel der Energieverteileinheit den Datenkanal abonniert. Dabei können die Empfangsmittel nur Meldungen aus Datenkanälen empfangen, die sie abonniert haben.

So kann die Bilderfassungseinheit eine Meldung in einen weiteren Datenkanal übermitteln, um mitzuteilen, dass ein Bildaufnahmevorgang erfolgen soll. Die mit der Energieverteileinheit direkt verbundene andere Steuervorrichtung empfängt die Meldung und bewirkt, dass eine Beleuchtung der Unterwasservorrichtung ausgeschaltet wird, um zu verhindern, dass das Beleuchtungslicht von der Bilderfassungseinheit erfasst wird.

Außerdem können beim Ausführen der Kommunikationsaufgabe Steuermeldungen an die Energieverteileinheit übermittelt werden. So kann eine Steuermeldung übermittelt werden, dass ein Bildaufnahmevorgang erfolgen soll. Die Energieverteileinheit bewirkt, dass die elektrische Verbindung zwischen dem elektrischen Verbraucher, insbesondere dem elektrischen Verbraucher der Bilderfassungseinheit, und der Energiequelle geschlossen wird. Dadurch kann auf einfache Weise erreicht werden, dass nur die elektrischen Verbraucher mit der Energiequelle elektrisch verbunden sind, die tatsächlich benötigt werden.

Beim Ausführen der Stromüberwachungsaufgabe kann die Energieverteileinheit, wie oben bereits beschrieben wurde, Stromwerte für eine vorgegebene erste Zeitdauer und für eine vorgegebene zweite Zeitdauer ermitteln. Dabei wird basierend auf den in der ersten Zeitdauer ermittelten Stromwerten ermittelt, ob ein Gefahrzustand besteht. Darüber hinaus wird beim Ausführen der Stromüberwachungsaufgabe durch Ermitteln des Stroms geprüft, ob der jeweilige elektrische Verbraucher eingeschaltet oder ausgeschaltet ist. Auch kann beim Ausführen der Stromüberwachungsaufgabe festgestellt werden, ob ein Kurzschluss vorliegt. Dies ist der Fall, wenn ein Stromwert erfasst wird, der über einem vorgegebenen Schwellwert liegt.

Beim Ausführen der Energiesteueraufgabe wird der Betriebszustand der Unterwasservorrichtung eingestellt. Dazu wird überwacht, ob eine Bedieneinheit betätigt wird. Infolge der Betätigung kann in einem Einschaltmodus die elektrische Verbindung zwischen dem elektrischen Verbraucher und der elektrischen Energiequelle hergestellt oder in einem Ausschaltmodus getrennt werden oder der elektrische Verbraucher und/oder die elektrische Anzeigeeinrichtung können in den Schlafmodus überführt werden oder der elektrische Verbraucher und/oder die elektrische Anzeigeeinrichtung können in den Energiesparmodus überführt werden.

Beim Ausführen der Abarbeitungsaufgabe können die in der Warteschlange befindlichen Meldungen abgearbeitet werden. Dabei kann nach Alarmmeldungen, und Handlungsmeldungen unterschieden werden.

Bei Alarmmeldungen handelt es sich um Meldungen, die einen Gefahrzustand signalisieren, sodass die elektrische Verbindung zwischen der elektrischen Energiequelle und dem elektrischen Verbraucher mittels der Energieverteilereinheit getrennt werden soll. Handlungsmeldungen beinhalten eine Information für den Empfänger, welche Handlung, wie beispielsweise ein Ausschalten des Empfängers, erfolgen wird. Der Empfänger kann basierend auf dieser Information weitere Schritte unternehmen, wie beispielsweise Daten zu speichern.

Für den Fall, dass die Steuervorrichtung oder die andere Steuervorrichtung ermittelt, dass die von dem Sensor und/oder von dem anderen Sensor erfasste Feuchtigkeit in dem Hohlraum über dem Grenzwert liegt, wird eine Alarmmeldung in dem Datenkanal veröffentlicht. Das Empfangsmittel der Energieverteileinheit empfängt die Alarmmeldung und setzt sie in die Warteschlange. Im Abarbeitungsbetrieb der Energieverteileinheit wird die Alarmmeldung abgearbeitet. Bei der Abarbeitung wird der elektrische Verbraucher von der elektrischen Energiequelle getrennt und der Gefahrzustand kann an der elektrischen Anzeigevorrichtung angezeigt werden.

Für den Fall, dass die Steuervorrichtung oder die andere Steuervorrichtung ermittelt, dass der von dem Sensor und/oder von dem anderen Sensor erfasste Druck in dem Hohlraum über einen vorgegebenen Grenzwert steigt, wird beispielsweise angenommen, dass eine Undichtigkeit besteht und eine Alarmmeldung in den Datenkanal ausgegeben.

Nach Empfang der Alarmmeldung und Setzen in die Warteschlange wird diese von der Energieverteileinheit abgearbeitet. Dabei werden die elektrischen Verbraucher von der Energiequelle getrennt und dem Taucher kann angezeigt werden, dass er nicht weiter abtauchen soll, um zu verhindern, dass noch mehr Wasser in den Hohlraum der Unterwasservorrichtung eindringt.

Beim Ausführen der Abarbeitungsaufgabe können auch durch die Steuervorrichtung der Energieverteileinheit erzeugte Alarmmeldungen abgearbeitet werden. Diese Alarmmeldungen können erzeugt werden, wenn aufgrund der erfassten Stromwerte ermittelt wird, dass ein Gefahrzustand besteht.

Beim Ausführen der Signalisierungsaufgabe kann der Status eines Beleuchtungsmittels geprüft werden. Dabei kann beim Ausführen des Signalisierungsbetriebs eingestellt werden, ob wenigstens ein Beleuchtungsmittel leuchtet oder nicht. Das Einstellen des Leuchtzustands des Beleuchtungsmittels kann abhängig von dem Betriebszustand der Unterwasservorrichtung und/oder von dem Vorliegen eines Gefahrzustands sein.

Bei einer besonderen Ausführung kann die Unterwasservorrichtung derart ausgebildet sein, dass sie von Hand betätigbar und/oder bedienbar und/oder tragbar ist. Dies bedeutet, dass die Unterwasservorrichtung nicht per Fernwartung von einem Schiff gesteuert wird, sondern ausschließlich von dem Taucher. Dabei kann die Unterwasservorrichtung propellerlos ausgebildet sein. Dies bedeutet, dass der Antrieb der Unterwasservorrichtung ausschließlich durch den Taucher erfolgt. Die Unterwasservorrichtung weist somit keinen Antriebsmotor zum Antreiben der Unterwasservorrichtung auf.

Von besonderem Vorteil ist eine Unterwasservorrichtung, die eine taucherbetreibbare Unterwasservorrichtung ist. Als taucherbetreibbare Unterwasservorrichtung wird eine Vorrichtung verstanden, die durch einen Taucher im oder unter Wasser betrieben werden kann. Dies bedeutet, dass der Taucher die Unterwasservorrichtung im oder unter Wasser bewegen und somit in die gewünschte Position bewegen kann, um den gewünschten Bereich des Wasserbodens aufzunehmen. Außerdem kann der Taucher die Unterwasservorrichtung im oder unter Wasser betreiben, insbesondere entsprechende Befehle eingeben, um Bilder vom Wasserboden aufzunehmen.

Alternativ kann die Unterwasservorrichtung ein autonomes Unterwasserfahrzeug (autonomous underwater vehicle) sein. Bei dieser Ausführung muss die Unterwasservorrichtung nicht mehr vom Taucher bewegt werden, um Bilder vom Wasserboden aufzunehmen. Die Steuerung des Unterwasserfahrzeugs kann autonom erfolgen.

Darüber hinaus kann die Unterwasservorrichtung ein kabelgeführtes Unterwasserfahrzeug (remotely operated vehicle) sein. Bei dieser Ausführung muss die Unterwasservorrichtung nicht mehr vom Taucher bewegt werden, um Bilder vom Wasserboden aufzunehmen. Die Steuerung des Unterwasserfahrzeugs kann durch eine auf dem Schiff befindliche Person erfolgen.

In den Figuren ist der Erfindungsgegenstand schematisch dargestellt, wobei gleiche oder gleichwirkende Elemente zumeist mit denselben Bezugszeichen versehen sind. Dabei zeigt:
- Figur 1: einen Aufbau einer erfindungsgemäßen taucherbetreibbaren Unterwasservorrichtung gemäß einer ersten Ausführung mit elektrischen Funktionseinheiten,
- Figur 2: den Aufbau einer Energieverteileinheit,
- Figur 3: eine perspektivische Darstellung der Unterwasservorrichtung gemäß der ersten Ausführung,
- Figur 4: eine Draufsicht auf die Unterwasservorrichtung gemäß der ersten Ausführung,
- Figur 5: einen Aufbau einer erfindungsgemäßen taucherbetreibbaren Unterwasservorrichtung gemäß einer zweiten Ausführung,
- Figur 6: einen Aufbau einer erfindungsgemäßen taucherbetreibbaren Unterwasservorrichtung gemäß einer dritten Ausführung.

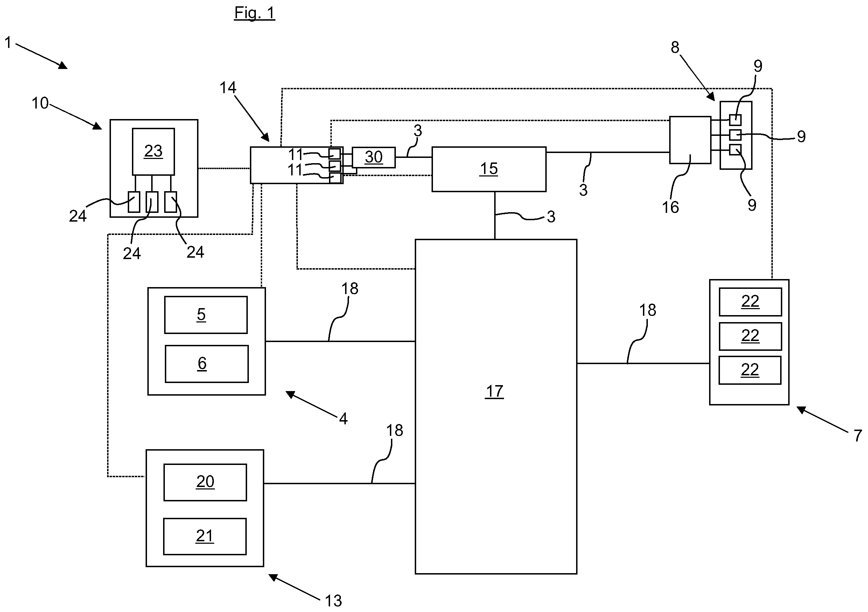

Die in Figur 1 gezeigte Unterwasservorrichtung 1 zur Bildaufnahme eines Wasserbodens ist eine taucherbetreibbare Unterwasservorrichtung und weist mehrere elektrische Funktionseinheiten auf. Alternativ kann die Unterwasservorrichtung 1 ein autonomes Unterwasserfahrzeug oder ein kabelgeführtes Unterwasserfahrzeug sein.

Dabei weist die Unterwasservorrichtung 1 als elektrische Funktionseinheiten eine Bilderfassungseinheit 4, eine Positionsbestimmungseinheit 7, eine Energieverteileinheit 14, eine Anzeigeeinrichtung 13 und eine Sensoreinheit 8 auf. Außerdem weist die Unterwasservorrichtung 1 drei Steuervorrichtungen auf, nämlich eine Steuervorrichtung 17, eine erste andere Steuervorrichtung 16 und eine zweite andere Steuervorrichtung 30.

Bei der in Figur 1 gezeigten Ausführung werden Steuerprogramme zum jeweiligen Steuern der Bilderfassungseinheit 4, der Positionsbestimmungseinheit 7 und der Anzeigeeinrichtung 13 durch die Steuervorrichtung 17 ausgeführt. Auf der ersten anderen Steuervorrichtung 16 wird ein Steuerprogramm zum Steuern der Sensoreinheit 8 ausgeführt und auf der zweiten anderen Steuervorrichtung 30 wird ein Steuerprogramm zum Steuern der Energieverteileinheit 14 ausgeführt. Die Unterwasservorrichtung 1 ist jedoch derart ausgeführt, dass für den Fall, dass die Leistung der Steuervorrichtung 17 nicht ausreicht, um die Daten zu verarbeiten, wenigstens ein Teil der Steuerprogramme zum Steuern der Bilderfassungseinheit 4, der Positionsbestimmungseinheit 7 und der Anzeigeeinrichtung auf nicht dargestellten anderen Steuervorrichtungen ausgeführt werden können.

Die Bilderfassungseinheit 4 weist eine Hyperspektralkamera 5 und eine Farbkamera 6 auf. Die Sensoreinheit 8 weist mehrere Sensoren 9 auf. Die Positionsbestimmungseinheit 7 weist mehrere Positionsbestimmungsmittel 22 auf, mittels denen Daten zur Istposition der Unterwasservorrichtung 1 erfasst werden.

Die Steuervorrichtung 17 ist mit der ersten anderen Steuervorrichtung 16 und der zweiten anderen Steuervorrichtung 30 mittels eines Datenbusses 3 datentechnisch verbunden. Die datentechnische Verbindung ist wieder lösbar ausgeführt und wird durch eine Steckverbindung realisiert.

Die Unterwasservorrichtung 1 weist weitere nachstehend näher beschriebene elektrische Verbraucher und eine elektrische Energiequelle 10 auf. Die elektrische Energiequelle 10 dient zum Versorgen der elektrischen Verbraucher mit elektrischer Energie.

Mittels der Energieverteileinheit 14 wird die von der Energiequelle 10 bereitgestellte elektrische Energie auf die elektrischen Verbraucher verteilt. Darüber hinaus wird durch die Energieverteileinheit 14 der elektrische Verbraucher von der elektrischen Energiequelle 10 elektrisch getrennt, wenn ein Gefahrzustand vorliegt. Die Energieverteileinheit 14 weist mehrere andere Sensoren 11 auf. Die anderen Sensoren 11 sind mit der zweiten anderen Steuervorrichtung 30 direkt datentechnisch verbunden.

Die zweite andere Steuervorrichtung 30 veranlasst, dass die elektrische Verbindung zwischen der Energiequelle 10 und zumindest einem elektrischen Verbraucher getrennt wird, wenn ein Gefahrzustand vorliegt.

Die Steuervorrichtung 17 ist mit der Bilderfassungseinheit 4, der Positionsbestimmungseinheit 7 und einer elektrischen Anzeigeeinrichtung 13 jeweils direkt datentechnisch verbunden ist. Die direkte Verbindung wird durch eine Datenleitung 18 realisiert. Die Unterwasservorrichtung 1 weist darüber hinaus einen Switch 15 auf, der mit der Steuervorrichtung 17, der ersten anderen Steuervorrichtung 16 und der zweiten anderen Steuervorrichtung 30 jeweils mittels eines Datenbusses 3 direkt datentechnisch verbunden ist.

Die Steuervorrichtung 17 kann einen Prozessor aufweisen. Darüber hinaus kann die Steuervorrichtung 17 drahtlos, beispielsweise über WLAN, mit in den Figuren nicht dargestellten Kommunikationsgeräten kommunizieren. Die Kommunikationsgeräte sind außerhalb der Unterwasservorrichtung 1, beispielsweise auf einem Schiff, angeordnet.

Mittels der Hyperspektralkamera 5 und der Farbkamera 6 werden Bilder des Wasserbodens aufgenommen. Das auf der Steuervorrichtung 17 ausgeführte Steuerprogramm bewirkt, dass die aufgenommenen Bilder verarbeitet, komprimiert und gespeichert werden. Die Bilderfassungseinheit 4 kann auf die von der Sensoreinheit 8 zur Verfügung gestellten Sensorwerte zugreifen, um die Belichtung, den Fokusabstand und die Aufnahmegeschwindigkeit anzupassen. Sowohl die Hyperspektralkamera 5 als auch die Farbkamera 6 können jeweils eine flüssige Linse aufweisen. Die Steuervorrichtung 17 kann für die zuvor genannte Verarbeitung der aufgenommenen Bilder eingesetzt werden.

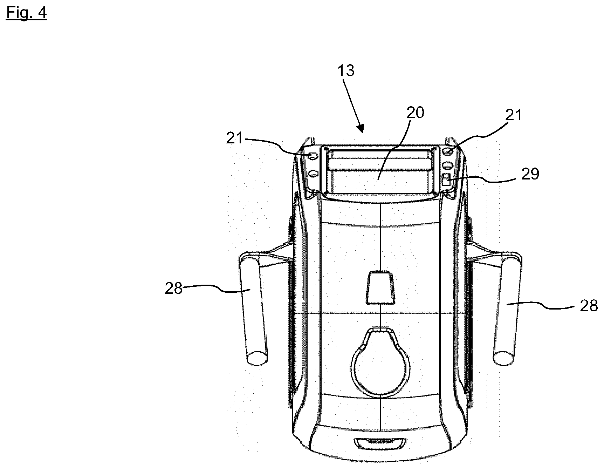

Die Anzeigeeinrichtung 13 kann eine Bildschirmanzeige 20 und eine Bedieneinheit in Form von Bedienknöpfen 21 aufweisen. Die Bedienknöpfe 21 können, wie aus Figur 4 ersichtlich ist, an einem Bildschirmgehäuse angebracht sein. Dabei können einige Funktionen der Unterwasservorrichtung 1 mittels der Bedienknöpfe 21 eingestellt werden. Die Anzeigeeinrichtung 13 ist mit der Steuervorrichtung 17 direkt datentechnisch verbunden.

Die Positionsbestimmungseinheit 7 weist, wie zuvor beschrieben wurde, zur Bestimmung der Istposition der Unterwasservorrichtung 1 eine Vielzahl von Positionsbestimmungsmittel 22, wie beispielsweise eine Sonareinrichtung, ein Unterwassernavigationssystem (USBL), einen GPS-Empfänger, etc. auf. Dabei kann die Steuervorrichtung 17 die Positionsbestimmungseinheit 7 bei der Bestimmung der Istposition der Unterwasservorrichtung 1 unterstützen. Insbesondere kann die Steuervorrichtung 17 die von den Positionsbestimmungsmitteln 22 gelieferten Daten verarbeiten. Die Steuerung der Positionsbestimmungseinheit 7 erfolgt durch das auf der Steuervorrichtung 17 ausgeführte Steuerprogramm.

Dies bedeutet, dass die Steuervorrichtung 17 mehrere technische Funktionen unterstützt. Insbesondere unterstützt die Steuervorrichtung 17 die Bilderfassungseinheit 4 bei der Bildverarbeitung, die Anzeigeeinrichtung 13 bei der Anzeige eines Betriebszustands auf der Bildschirmanzeige 20 und die Positionsbestimmungseinheit 7 bei der Istpositionsbestimmung. Bei einer alternativen, nicht dargestellten Ausführung können die Bilderfassungseinheit 14 und/oder die Positionsbestimmungseinheit 12 und/oder die Anzeigeeinrichtung 13 jeweils eine eigene Steuervorrichtung aufweisen.

In Figur 1 ist die datentechnische Kommunikation zwischen den elektrischen Funktionseinheiten der Unterwassereinrichtung 1 mit durchgezogenen Linien dargestellt. Die Kommunikation zwischen den elektrischen Funktionseinheiten erfolgt unter Verwendung eines Kommunikationsprotokolls, das einen Veröffentlichen-/Abonnieren Mechanismus aufweist. Bei dem Kommunikationsprotokoll handelt es sich um MQTT-Kommunikationsprotokoll.

Ein durch ein Sensor 9 der Sensoreinheit 14 erfasster Sensorwert wird durch die erste andere Steuervorrichtung 16 in einem nicht dargestellten Datenkanal veröffentlicht. Der Sensorwert kann durch die Steuervorrichtung 17 und/oder die zweite andere Steuervorrichtung 30 empfangen werden, wenn die Steuervorrichtung 17 und/oder die zweite andere Steuervorrichtung 30 den Datenkanal abonniert haben. Zum Empfang des Sensorwerts weist die Steuervorrichtung 17 und/oder die zweite andere Steuervorrichtung 30 ein Empfangsmittel auf.

Darüber hinaus kann durch die erste andere Steuervorrichtung 16 ermittelt werden, ob ein durch den Sensor 9 erfasster Sensorwert von einem Grenzwert abweicht oder außerhalb eines Grenzbereichs liegt und somit eine Gefahrsituation vorliegt. Sollte dies der Fall sein, kann die erste andere Steuervorrichtung 16 eine Alarmmeldung in einem anderen Datenkanal veröffentlichen. Die Alarmmeldung können nur die Empfangsmittel empfangen, die den anderen Datenkanal abonniert haben. So wird an die Bilderfassungseinheit 4, die den anderen Datenkanal nicht empfangen hat, die Alarmmeldung nicht ausgegeben. Dagegen hat die zweite andere Steuervorrichtung 30 den anderen Datenkanal abonniert, sodass die Alarmmeldung an die Energieverteileinheit 14 übermittelt wird. Anschließend kann die Energieverteileinheit 14 im Abarbeitungsmodus die elektrische Verbindung zwischen der Energiequelle 4 und den elektrischen Verbrauchern trennen.

In Figur 1 sind die elektrischen Verbindungen zwischen den Komponenten der Unterwasservorrichtung 1 gestrichelt dargestellt. Wie aus Figur 1 ersichtlich ist, ist die Energieverteileinheit 14 mit mehreren elektrischen Verbrauchern elektrisch verbunden. Dabei weist die Anzeigeeinrichtung 13, die Bilderfassungseinheit 4, die Steuervorrichtung 17, der Switch 15, die Sensoreinheit 8, und die Positionsbestimmungseinheit 7, insbesondere einzelne Positionsbestimmungsmittel, jeweils wenigstens einen elektrischen Verbraucher auf, der Elektronikbauteile aufweist und daher mittels der Energieverteileinheit 14 von der Energiequelle 10 getrennt werden kann.

Die elektrische Energiequelle 10 weist mehrere Batterien 24 und eine Batteriesteuervorrichtung 23 zum Steuern der Batterien auf. Dabei ist die elektrische Energiequelle 4 der Energieverteileinheit 14 vorgeschaltet.

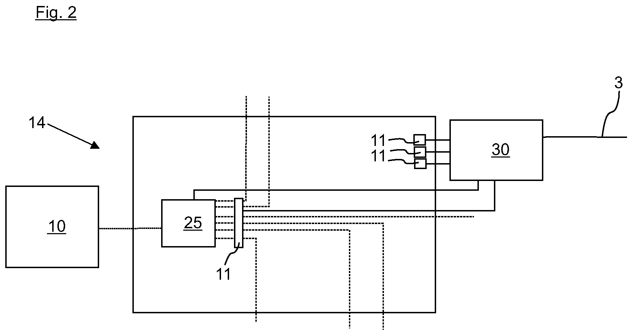

Figur 2 zeigt den Aufbau einer Energieverteileinheit 14. Wie bereits beschrieben wurde, weist die Energieverteileinheit 14 mehrere andere Sensoren 11 auf. Darüber hinaus weist die Energieverteileinheit 14 wenigstens eine Schalteinrichtung 25 auf, mittels der die elektrische Verbindung zwischen der Energiequelle 10 und dem jeweiligen elektrischen Verbraucher getrennt werden kann. Dazu weist die Schalteinrichtung 25 eine Vielzahl von nicht dargestellten Schaltern auf, mittels denen die elektrische Verbindung zu dem jeweiligen elektrischen Verbraucher getrennt werden kann. Insbesondere kann mittels der Schalter die elektrische Verbindung eines elektrischen Verbrauchers separat und/oder unabhängig von anderen elektrischen Verbrauchern getrennt werden.

Darüber hinaus ist in Figur 2 ein anderer Sensor 11 dargestellt, mittels dem die Stromstärke in dem jeweiligen elektrischen Verbraucher erfasst wird. Die erfassten Stromwerte werden durch die zweite andere Steuervorrichtung 30 ausgewertet. Die Energieverteileinheit 14 weist außerdem weitere andere Sensoren 11 auf, mittels denen eine Temperatur, ein Druck und/oder die Feuchtigkeit innerhalb eines Hohlraums der Unterwasservorrichtung 1 ermittelt werden kann.

Sofern eine Gefahrsituation durch die zweite andere Steuervorrichtung 30 und/oder durch die erste andere Steuervorrichtung 16 ermittelt wurde, bewirkt die zweite andere Steuervorrichtung 30 bei der Abarbeitung der Alarmmeldungen in der Warteschlange, dass die Schalteinrichtung 25, insbesondere der oder die Schalter, derart geschalten wird, dass die elektrische Verbindung zwischen der Energiequelle 10 und den elektrischen Verbrauchern getrennt wird.

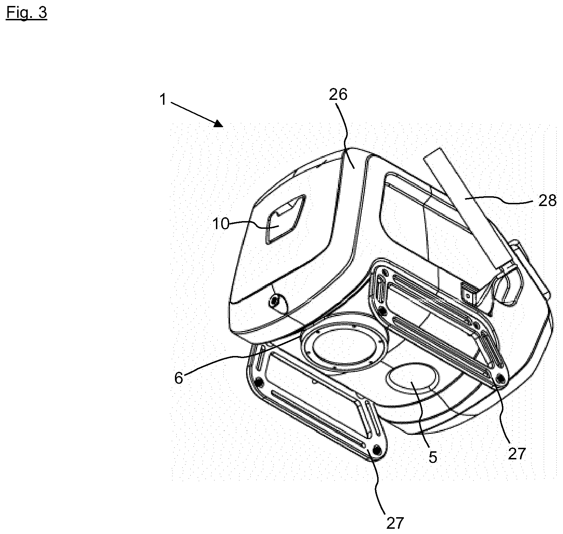

Figur 3 zeigt eine perspektivische Darstellung der Unterwasservorrichtung 1 von unten. Die Unterwasservorrichtung 1 weist ein Gehäuse 11 auf, das einen nicht dargestellten Hohlraum umschließt. Die elektrischen Verbraucher und die Energieverteileinheit 14 sind in dem Hohlraum angeordnet. Die Unterwasservorrichtung 1 weist an ihrer Unterseite zwei Durchbrüche auf. Dabei dient ein erster Durchbruch 6 zur Aufnahme eines Sensors der nicht dargestellten Positionsbestimmungseinheit auf. Ein zweiter Durchbruch wird durch eine transparente Platte 5, wie eine Glasscheibe, und ein die transparente Platte aufnehmendes Gehäuse verschlossen. Die Hyperspektralkamera und die RGB-Kamera können derart innerhalb des Hohlraums angeordnet sein, dass sie durch die transparente Platte 5 Aufnahmen des Wasserbodens tätigen.

Die Unterwasservorrichtung 1 weist außerdem zwei Aufsetzeinrichtungen 27 auf, die von der Unterseite des Gehäuses 26 hervorragen. Die beiden, insbesondere schienenförmigen, Aufsetzeinrichtungen 27 verlaufen parallel zueinander und dienen zum Aufsetzen der Unterwasservorrichtung 1 auf einen Boden. Insbesondere kann durch die Aufsetzeinrichtungen 27 verhindert werden, dass die transparente Platte 6 in Kontakt mit dem Boden gelangt.

Die Unterwasservorrichtung 1 weist an einer Stirnseite eine Ausnehmung für die elektrische Energiequelle 10 auf. Die elektrische Energiequelle 10 ist in der Ausnehmung wieder lösbar mit dem Gehäuse 26 verbunden. Insbesondere ist die Energiequelle 10 formschlüssig und/oder kraftschlüssig mit dem Gehäuse 26 verbunden. Die Energiequelle 10 weist mehrere in den Figuren nicht dargestellte Batterien auf.

Die Unterwasservorrichtung 1 weist außerdem zwei Handgriffe 28, die am Gehäuse 26 angebracht sind und sich, wie aus Figur 4 ersichtlich ist, bezüglich des Gehäuses 26 gegenüberliegen. Der Taucher kann mittels der Handgriffe 28 die Unterwasservorrichtung 1 einfach manövrieren und bewegen.

Figur 4 zeigt eine Draufsicht auf die Unterwasservorrichtung 1. Die Unterwasservorrichtung 1 weist an einer anderen Stirnseite die Anzeigeeinrichtung 13 auf. Die Anzeigeeinrichtung 13 weist eine Bildschirmanzeige 20 auf. Außerdem weist die Anzeigeeinrichtung 13 Bedienknöpfe 21 auf, mittels denen die Unterwasservorrichtung 1 bedient wird. Darüber hinaus weist die Unterwasservorrichtung 1 eine LED-Anzeige 29, die den Betriebszustand der Unterwasservorrichtung 1 anzeigt. Insbesondere kann mittels der LED-Anzeige 29 und/oder der Bildschirmanzeige 20 angezeigt werden, ob eine Gefahrsituation besteht.

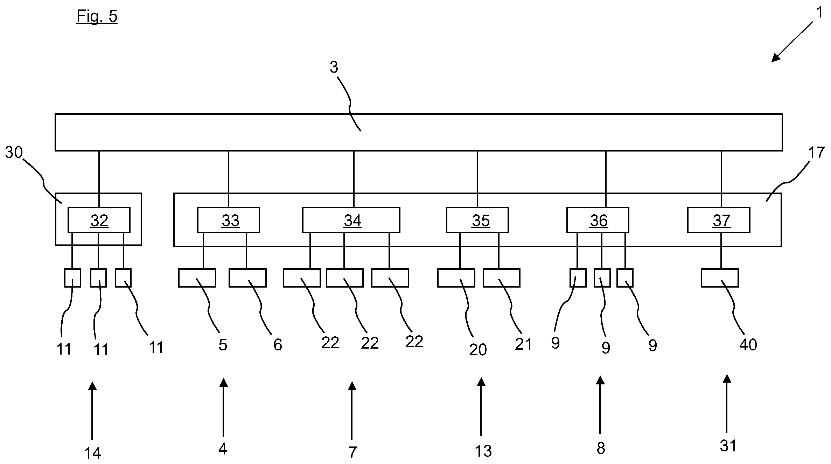

Figur 5 zeigt einen Aufbau einer erfindungsgemäßen Unterwasservorrichtung 1 gemäß einer zweiten Ausführung. Die in Figur 5 gezeigte Unterwasservorrichtung 1 unterscheidet sich von der in den Figuren 1 und 2 gezeigten Unterwasservorrichtung dadurch, dass sie eine Speichereinheit 31 aufweist. Ein weiterer Unterschied besteht, dass die in Figur 5 gezeigte Ausführung genau zwei Steuervorrichtungen, nämlich die Steuervorrichtung 17 und die zweite andere Steuervorrichtung 30 aufweist.

Darüber hinaus sind in Figur 5 die Steuerprogramme 32-37 gezeigt, die die Energieverteileinheit 14, die Bilderfassungseinheit 4, die Positionsbestimmungseinheit 7, die Anzeigeeinrichtung 13, die Sensoreinheit 8 und die Speichereinheit 31 Steuern. Das Steuerprogramm 32 zum Steuern der Energieverteileinheit 4 wird auf der zweiten anderen Steuervorrichtung 30 ausgeführt. Die restlichen Steuerprogramme werden auf der Steuervorrichtung 17 ausgeführt.

Die Steuerprogramme 32-37 kommunizieren jeweils mit dem Datenbus 3. Die Kommunikation kann über jeweilige Schnittstellen der Steuervorrichtung 17 bzw. der zweiten anderen Steuervorrichtung 30 erfolgen. Die Steuervorrichtung 17 bzw. die zweite andere Steuervorrichtung 30 sind über Schnittstellen mit dem Datenbus 3 jeweils datentechnisch verbunden. Insbesondere können die Steuerprogramme 32-37 über die Schnittstellen mit dem Datenbus 3 kommunizieren.

Darüber hinaus kommuniziert das Steuerprogramm 32 der Energieverteileinheit 14 mit den anderen Sensoren 11 der Energieverteileinheit 4. Das Steuerprogramm 33 der Bilderfassungseinheit 4 kommuniziert mit der Hyperspektralkamera 5 und der der Farbkamera 6. Das Steuerprogramm 34 der Positionsbestimmungseinheit 7 kommuniziert mit den Positionsbestimmungsmitteln 22 und das Steuerprogramm 35 der Anzeigeeinrichtung kommuniziert mit der Bildschirmanzeige 20 und den Bedienknöpfen 21. Das Steuerprogramm 36 der Sensoreinheit 8 kommuniziert mit den Sensoren 9 der Sensoreinheit 8 und das Steuerprogramm 37 der Speichereinheit 31 kommuniziert mit einem elektrischen Speicher 40, wie einer Festplatte. Die Kommunikation der Steuerprogramme 32-37 mit ihren jeweiligen Komponenten erfolgt über andere Schnittstellen der Steuervorrichtung 17 bzw. der zweiten anderen Steuervorrichtung 30. Die Steuervorrichtung 17 bzw. die zweite andere Steuervorrichtung 30 ist mittels der anderen Schnittstelle mit den zuvor genannten Komponenten datentechnisch verbunden.

Im Betrieb kann in gleicher Weise, wie bei der ersten Ausführung, beispielsweise die Steuervorrichtung 17 Daten der Kameras 5, 6 der Bilderfassungseinheiten empfangen. Das Steuerprogramm 33 der Bilderfassungseinheit 33 kann veranlassen, dass die Daten beispielsweise zu Bildern verarbeitet werden. Darüber hinaus kann die Steuervorrichtung 17, insbesondere das darauf ausgeführte Steuerprogramm 33 für die Bilderfassungseinheit, veranlassen, dass die verarbeiteten Daten in einen Datenkanal des Datenbusses 3 übermittelt werden. Die in den Datenkanal des Datenbusses 3 übermittelten Daten können von den verbleibenden Funktionseinheiten empfangen werden, wenn sie den Datenkanal abonniert haben. Insbesondere kann das Steuerprogramm der jeweiligen Funktionseinheit veranlassen, dass die in den Datenkanal übermittelten Daten empfangen werden. Die empfangenen Daten können in der jeweiligen Funktionseinheit weiterverarbeitet werden.

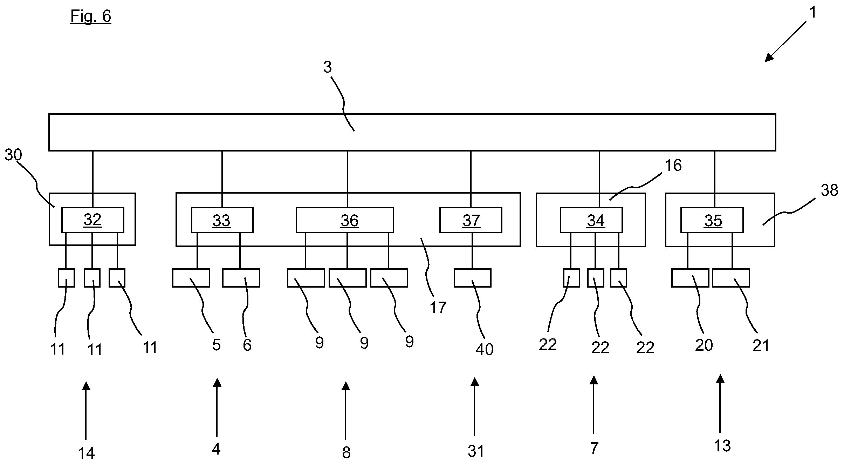

Figur 6 zeigt einen Aufbau einer erfindungsgemäßen Unterwasservorrichtung gemäß einer dritten Ausführung. Die dritte Ausführung unterscheidet sich von der in Figur 5 gezeigten zweiten Ausführung dadurch, dass sie vier Steuervorrichtungen, nämlich die Steuervorrichtung 17, die erste andere Steuervorrichtung 16, die zweite andere Steuervorrichtung 30 und eine dritte andere Steuervorrichtung 38 aufweist.

Dabei wird das Steuerprogramm 32 zum Steuern der Energieverteileinheit 14 auf der zweiten anderen Steuervorrichtung 30 ausgeführt. Die Steuerprogramme 33, 36, 37 dienen zum Steuern der Bilderfassungseinheit 4, der Sensoreinheit 8 und der Speichereinheit 31 und werden auf der Steuervorrichtung 17 ausgeführt. Das Steuerprogramm 34 zum Steuern der Positionsbestimmungseinheit 22 wird auf der ersten anderen Steuervorrichtung 16 und das Steuerprogramm 35 zum Steuern der Anzeigeeinrichtung 13 wird auf der dritten anderen Steuervorrichtung 38 ausgeführt.

Der Datenaustausch zwischen den Funktionseinheiten erfolgt in gleicher Weise wie bei den oben beschriebenen Ausführungen der Unterwasservorrichtung 1.

Die in den Figuren 5 und 6 gezeigten Unterwasservorrichtungen 1 können bis auf die beschriebenen Unterschiede in gleicher Weise ausgebildet sein wie die Unterwasservorrichtung gemäß der ersten Ausführung. Insbesondere können die in den Figuren 5 und 6 gezeigte Unterwasservorrichtungen 1 die in den Figuren 3 und 4 gezeigte Ausbildung aufweisen.

### Bezugszeichenliste:

- 1: Unterwasservorrichtung
- 3: Datenbus
- 4: Bilderfassungseinheit
- 5: Hyperspektralkamera
- 6: Referenzkamera
- 7: Positionsbestimmungseinheit
- 8: Sensoreinheit
- 9: Sensor
- 10: elektrische Energiequelle
- 11: andere Sensoren
- 13: elektrische Anzeigeeinrichtung
- 14: Energieverteileinheit
- 15: Switch
- 16: erste andere Steuervorrichtung
- 17: Steuervorrichtung
- 18: Datenleitung
- 20: Bildschirmanzeige
- 21: Bedienknöpfe
- 22: Positionsbestimmungsmittel
- 23: Batterien
- 24: Batteriesteuervorrichtung
- 25: Schalter
- 26: Gehäuse
- 27: Aufsetzeinrichtung
- 28: Handgriff
- 29: LED-Anzeige
- 30: zweite andere Steuervorrichtung
- 31: Speichereinheit
- 32: Steuerprogramm zum Steuern der Energieverteileinheit
- 33: Steuerprogramm zum Steuern der Bilderfassungseinheit
- 34: Steuerprogramm zum Steuern der Positionsbestimmungseinheit
- 35: Steuerprogramm zum Steuern der Anzeigeeinrichtung
- 36: Steuerprogramm zum Steuern der Sensoreinheit
- 37: Steuerprogramm zum Steuern der Sensoreinheit
- 38: dritte andere Steuervorrichtung
- 40: elektrischer Speicher

## Patentansprüche

1. Unterwasservorrichtung (1) zur Bildaufnahme eines Wasserbodens
mit mehreren elektrischen Funktionseinheiten,
einem Steuerprogramm zum Steuern einer elektrischen Funktionseinheit,
einem anderen Steuerprogramm zum Steuern einer anderen elektrischen Funktionseinheit und
wenigstens einer Steuervorrichtung, **dadurch gekennzeichnet, dass**
die Unterwasservorrichtung (1) einen Datenbus aufweist, der derart eingerichtet ist, dass eine Steuervorrichtung und eine andere Steuervorrichtung, die als separate Baueinheiten ausgebildet sind und die nicht dieselbe Platine aufweisen, separat voneinander an den Datenbus anschließbar sind, und dass
die Unterwasservorrichtung (1) derart ausgeführt ist, dass wahlweise das Steuerprogramm und das andere Steuerprogramm auf derselben Steuervorrichtung ausführbar sind oder
das Steuerprogramm auf der einen Steuervorrichtung und das andere Steuerprogramm auf der anderen Steuervorrichtung ausführbar ist.

2. Unterwasservorrichtung (1) nach Anspruch 1, **dadurch gekennzeichnet, dass**
a. die elektrischen Funktionseinheiten derart konfiguriert sind, dass sie unter Verwendung eines nachrichtenbasierten Kommunikationsprotokolls miteinander kommunizieren und/oder dass
b. das bei der Datenkommunikation eingesetzte Kommunikationsprotokoll einen Veröffentlichen-/ Abonnieren Mechanismus aufweist und/oder dass
c. das bei der Datenkommunikation eingesetzte Kommunikationsprotokoll das Message Queue Telemetry Transport Protokoll (MQTT) umfasst.

3. Unterwasservorrichtung (1) nach Anspruch 2, **dadurch gekennzeichnet, dass**
a. das nachrichtenbasierte Kommunikationsprotokoll derart konfiguriert ist, dass es erlaubt, dass die elektrische Funktionseinheit und/oder die andere elektrische Funktionseinheit eine Information in wenigstens einem Datenkanal veröffentlicht, und insbesondere die Steuervorrichtung derart konfiguriert ist, dass sie die Information der elektrischen Funktionseinheit und/oder der anderen elektrischen Funktionseinheit in dem Datenkanal veröffentlicht oder dass die Steuervorrichtung derart konfiguriert ist, dass sie die Information der elektrischen Funktionseinheit in dem Datenkanal veröffentlicht und die andere Steuervorrichtung die Information der anderen elektrischen Funktionseinheit in dem Datenkanal veröffentlicht, und/oder dass
b. das nachrichtenbasierte Kommunikationsprotokoll derart konfiguriert ist, dass es erlaubt, dass die elektrische Funktionseinheit und/oder die andere elektrische Funktionseinheit eine Information aus wenigstens einem Datenkanal empfängt, insbesondere die Steuervorrichtung derart konfiguriert ist, dass sie die Information der elektrischen Funktionseinheit und/oder der anderen elektrischen Funktionseinheit in dem Datenkanal veröffentlicht oder dass die Steuervorrichtung derart konfiguriert ist, dass sie die Information der elektrischen Funktionseinheit in dem Datenkanal veröffentlicht und die andere Steuervorrichtung die Information der anderen elektrischen Funktionseinheit in dem Datenkanal veröffentlicht.

4. Unterwasservorrichtung nach Anspruch 3, **dadurch gekennzeichnet, dass**
a. die Steuervorrichtung derart konfiguriert ist, dass sie die Information der elektrischen Funktionseinheit und/oder der anderen elektrischen Funktionseinheit aus dem Datenkanal empfängt oder dass
b. die Steuervorrichtung derart konfiguriert ist, dass sie die Information der elektrischen Funktionseinheit aus dem Datenkanal empfängt und die andere Steuervorrichtung die Information der anderen elektrischen Funktionseinheit aus dem Datenkanal empfängt.

5. Unterwasservorrichtung (1) nach einem der Ansprüche 1 bis 4, **dadurch gekennzeichnet, dass** die Unterwasservorrichtung (1) eine Zentrale aufweist, die derart konfiguriert ist, dass sie die von der elektrischen Funktionseinheit und/oder von der anderen elektrischen Funktionseinheit in einem Datenkanal veröffentlichten Informationen verwaltet.

6. Unterwasservorrichtung (1) nach Anspruch 5, **dadurch gekennzeichnet, dass**
a. die Zentrale derart ausgebildet ist, dass sie derart konfiguriert ist, dass sie die in dem Datenkanal veröffentlichten Informationen an Empfangsmittel übermittelt, die den Datenkanal abonniert haben, und insbesondere die Steuervorrichtung und/oder die andere Steuervorrichtung das Empfangsmittel aufweist und/oder dass
b. die Steuervorrichtung oder die andere Steuervorrichtung die Zentrale aufweist.

7. Unterwasservorrichtung (1) nach einem der Ansprüche 1 bis 6, **dadurch gekennzeichnet, dass**
a. die erste elektrische Funktionseinheit und die andere elektrische Funktionseinheit mit der Steuervorrichtung direkt datentechnisch, insbesondere wieder lösbar, verbunden sind, wenn das erste Steuerprogramm und das zweite Steuerprogramm auf der Steuervorrichtung ausgeführt werden und/oder dass
b. die datentechnische Verbindung mittels einer Steckverbindung realisiert ist und/oder dass
c. die elektrische Funktionseinheit eine, insbesondere modular ausgebildete, Bilderfassungseinheit zum Erstellen eines Bildes des Wasserbodens ist, insbesondere und die Bilderfassungseinheit (4) eine Hyperspektralkamera (5) zur Bildaufnahme eines Wasserbodens aufweist und/oder eine Farbkamera (6), insbesondere eine RGB-Kamera, zur Bildaufnahme eines Wasserbodens aufweist.

8. Unterwasservorrichtung (1) nach einem der Ansprüche 1 bis 7, **dadurch gekennzeichnet, dass**
a. die Unterwasservorrichtung (1) derart konfiguriert ist, dass sie basierend auf den aufgenommenen Bildern den Wasserboden kartiert und/oder dass
b. die elektrische Funktionseinheit eine, insbesondere modular ausgebildete, Positionsbestimmungseinheit (7) zum Bestimmen einer Position der Unterwasservorrichtung (1) ist und/oder dass
c. die elektrische Funktionseinheit eine, insbesondere modular ausgebildete, Sensoreinheit ist, die wenigstens einen Sensor (9) aufweist, insbesondere und der Sensor (9) mit der Steuervorrichtung oder der anderen Steuervorrichtung datentechnisch verbunden ist und/oder dass
d. die elektrische Funktionseinheit eine elektrische Anzeigeeinrichtung zum Anzeigen des Betriebszustands der Unterwasservorrichtung ist.

9. Unterwasservorrichtung (1) nach einem der Ansprüche 1 bis 8, **dadurch gekennzeichnet, dass** die elektrische Funktionseinheit eine Energieverteileinheit (14) zum Verteilen der elektrischen Energie zwischen einer elektrischen Energiequelle (10) und einem elektrischen Verbraucher ist.

10. Unterwasservorrichtung (1) nach Anspruch 9, **dadurch gekennzeichnet, dass** die Energieverteileinheit (14) wenigstens einen anderen Sensor (11) aufweist, der mit der Steuervorrichtung oder der anderen Steuervorrichtung datentechnisch verbunden ist.

11. Unterwasservorrichtung (1) nach Anspruch 10, **dadurch gekennzeichnet, dass** mittels des Sensors (11) der an den elektrischen Verbraucher zugeführte Strom oder die an einer elektrischen Energiequelle (10) oder an der Datenerfassungseinheit anliegende Spannung ermittelbar ist.

12. Unterwasservorrichtung (1) nach einem der Ansprüche 8c, 9 bis 11, **dadurch gekennzeichnet, dass** mittels des Sensors (9) und/oder des anderen Sensors (11) eine Temperatur oder eine Feuchtigkeit oder ein Druck innerhalb eines Hohlraums der Unterwasservorrichtung (1) ermittelbar ist.

13. Unterwasservorrichtung (1) nach einem der Ansprüche 8c, 9 bis 12, **dadurch gekennzeichnet, dass** die Unterwasservorrichtung (1) derart konfiguriert ist, dass sie basierend auf einem Sensorwert ermittelt, ob ein Gefahrzustand für einen elektrischen Verbraucher vorliegt und die Energieverteileinheit (14) den elektrischen Verbraucher von der elektrischen Energiequelle (10) trennt, wenn ein Gefahrzustand vorliegt.

14. Unterwasservorrichtung (1) nach einem der Ansprüche 1 bis 13, **gekennzeichnet durch** eine elektrische Energiequelle (10) zum Versorgen eines elektrischen Verbrauchers mit elektrischer Energie, wobei die elektrische Energiequelle (10)
a. modular ausgebildet ist und/oder
b. eine Batteriesteuervorrichtung (23) zum Überwachen des Batteriezustands aufweist und/oder
c. wieder lösbar mit einem Gehäuse (26) der Unterwasservorrichtung (1) verbindbar ist.

15. Unterwasservorrichtung (1) nach einem der Ansprüche 1 bis 14, **dadurch gekennzeichnet, dass**
a. die Unterwasservorrichtung (1) derart ausgebildet ist, dass sie von Hand betätigbar und/oder bedienbar und/oder tragbar ist und/oder dass
b. die Unterwasservorrichtung (1) propellerlos ausgebildet ist und/oder dass die Unterwasservorrichtung (1) eine taucherbetreibbare Unterwasservorrichtung oder ein autonomes Unterwasserfahrzeug oder ein kabelgeführtes Unterwasserfahrzeug ist.

## Claims

1. An underwater device (1) for acquiring images of a water bottom comprising multiple electrical functional units,
a control program for controlling an electrical functional unit,
a further control program for controlling a further electrical functional unit, and
at least one control device, **characterized in that**
the underwater device (1) has a data bus, which is configured such that a control device and a further control device, which are formed as separate units and do not share the same circuit board, can be connected to the data bus independently of one another, and that
the underwater device (1) is configured such that selectively the control program and the further control program can be executed on the same control device or
the control program can be executed on one control device and the further control program on the other control device.

2. The underwater device (1) according to claim 1, **characterized in that**
a. the electrical functional units are configured to communicate with each other using a message-based communication protocol, and/or that
b. the communication protocol used for data communication has a publish/subscribe mechanism, and/or that
c. the communication protocol used for data communication comprises the Message Queue Telemetry Transport protocol (MQTT).

3. The underwater device (1) according to claim 2, **characterized in that**
a. the message-based communication protocol is configured such that it allows the electrical functional unit and/or the further electrical functional unit to publish information on at least one data channel, and, in particular, the control device is configured such that it publishes the information of the electrical functional unit and/or the further electrical functional unit on the data channel or that the control device is configured such that it publishes the information of the electrical functional unit on the data channel, and the further control device publishes the information of the further electrical functional unit on the data channel, and/or that
b. the message-based communication protocol is configured such that it allows the electrical functional unit and/or the further electrical functional unit to receive information from at least one data channel, in particular, the control device is configured such that it publishes the information of the electrical functional unit and/or the further electrical functional unit on the data channel or that the control device is configured such that it publishes the information of the electrical functional unit on the data channel, and the further control device publishes the information of the further electrical functional unit on the data channel.

4. The underwater device according to claim 3, **characterized in that**
a. the control device is configured such that it receives the information of the electrical functional unit and/or the further electrical functional unit from the data channel or that
b. the control device is configured such that it receives the information of the electrical functional unit from the data channel, and the further control device receives the information of the further electrical functional unit from the data channel.

5. The underwater device (1) according to one of claims 1 to 4, **characterized in that** the underwater device (1) has a central unit, which is configured to manage the information published by the electrical functional unit and/or by the further electrical functional unit on a data channel.

6. The underwater device (1) according to claim 5, **characterized in that**
a. the central unit is designed such that it is configured to transmit the information published on the data channel to receiving means that have subscribed to the data channel, and in particular the control device and/or the further control device has the receiving means and/or that
b. the control device or the further control device has the central unit.

7. The underwater device (1) according to any one of claims 1 to 6, **characterized in that**
a. the first electrical functional unit and the further electrical functional unit are directly connected, in particular detachably, to the control device in terms of data technology, when the first control program and the second control program are executed on the control device, and/or that
b. the data connection is realized by means of a plug connection, and/or that
c. the electrical functional unit is an image capture unit, in particular of modular design, for creating an image of the water bottom, in particular and the image capture unit (4) has a hyperspectral camera (5) for acquiring images of a water bottom and/or a color camera (6), in particular an RGB camera, for acquiring images of a water bottom.

8. The underwater device (1) according to any one of claims 1 to 7, **characterized in that**
a. the underwater device (1) is configured to map the water bottom based on the recorded images, and/or that
b. the electrical functional unit is a position determination unit (7), in particular of modular design, for determining a position of the underwater device (1), and/or that
c. the electrical functional unit is a sensor unit, in particular of modular design, which has at least one sensor (9), in particular and the sensor (9) is connected to the control device or the further control device in terms of data technology and/or that
d. the electrical functional unit is an electrical display device for displaying the operating status of the underwater device.

9. The underwater device (1) according to any one of claims 1 to 8, **characterized in that** the electrical functional unit is an energy distribution unit (14) for distributing the electrical energy between an electrical energy source (10) and an electrical consumer.

10. The underwater device (1) according to claim 9, **characterized in that** the energy distribution unit (14) has at least one further sensor (11) which is connected to the control device or the further control device in terms of data technology.

11. The underwater device (1) according to claim 10, **characterized in that** the current supplied to the electrical consumer or the voltage applied to an electrical energy source (10) or to the data acquisition unit can be determined by means of the sensor (11).

12. The underwater device (1) according to any one of claims 8c, 9 to 11, **characterized in that** a temperature or a humidity or a pressure within a cavity of the underwater device (1) can be determined by means of the sensor (9) and/or the further sensor (11).

13. The underwater device (1) according to any one of claims 8c, 9 to 12, **characterized in that** the underwater device (1) is configured such that it determines, based on a sensor value, whether a hazardous condition is present for an electrical consumer and that the energy distribution unit (14) disconnects the electrical consumer from the electrical energy source (10) when a hazardous condition is present.

14. The underwater device (1) according to any one of claims 1 to 13, **characterized by** an electrical energy source (10) for supplying an electrical consumer with electrical energy, wherein the electrical energy source (10)
a. is of modular design, and/or
b. has a battery control device (23) for monitoring the battery condition, and/or
c. can be detachably connected to a housing (26) of the underwater device (1).

15. The underwater device (1) according to any one of claims 1 to 14, **characterized in that**
a. the underwater device (1) is designed such that it can be manually operated and/or operated and/or carried, and/or that
b. the underwater device (1) is designed without a propeller and/or that the underwater device (1) is a diver-operated underwater device or an autonomous underwater vehicle or a cable-guided underwater vehicle.

## Revendications

1. Dispositif sous-marin (1) pour la prise de vues d'un fond aquatique, comportant plusieurs unités fonctionnelles électriques,
un programme de commande pour commander une unité fonctionnelle électrique,
un autre programme de commande pour commander une autre unité fonctionnelle électrique et
au moins un dispositif de commande, **caractérisé en ce que**
le dispositif sous-marin (1) comprend un bus de données, lequel est conçu de telle sorte que le dispositif de commande et l'autre dispositif de commande, lesquels sont conçus sous la forme d'unités séparées et lesquels ne comportent pas la même carte de circuit imprimé, peuvent être connectés séparément au bus de données, et **en ce que**
le dispositif sous-marin (1) est conçu de telle sorte que le programme de commande et l'autre programme de commande peuvent être sélectivement exécutés sur le même dispositif de commande ou
le programme de commande peut être exécuté sur le dispositif de commande et l'autre programme de commande sur l'autre dispositif de commande.

2. Dispositif sous-marin (1) selon la revendication 1, **caractérisé en ce que**
a. les unités fonctionnelles électriques sont conçues pour communiquer entre elles à l'aide d'un protocole de communication basé sur des messages et/ou **en ce que**
b. le protocole de communication utilisé pour la communication de données comporte un mécanisme de publication/d'abonnement et/ou **en ce que**
c. le protocole de communication utilisé pour la communication de données comprend le protocole de messagerie publication/abonnement (MQTT).

3. Dispositif sous-marin (1) selon la revendication 2, **caractérisé en ce que**
a. le protocole de communication basé sur des messages est configuré de telle sorte qu'il permet à l'unité fonctionnelle électrique et/ou à l'autre unité fonctionnelle électrique de publier des informations dans au moins un canal de données, et, en particulier, le dispositif de commande est conçu de telle sorte qu'il publie les informations de l'unité fonctionnelle électrique et/ou de l'autre unité fonctionnelle électrique dans le canal de données ou **en ce que** le dispositif de commande est conçu de telle sorte qu'il publie les informations de l'unité fonctionnelle électrique dans le canal de données et l'autre dispositif de commande publie les informations de l'autre unité fonctionnelle électrique dans le canal de données, et/ou **en ce que**
b. le protocole de communication basé sur des messages est configuré de telle sorte qu'il permet à l'unité fonctionnelle électrique et/ou à l'autre unité fonctionnelle électrique de recevoir des informations provenant d'au moins un canal de données, en particulier le dispositif de commande est conçu de telle sorte qu'il publie les informations de l'unité fonctionnelle électrique et/ou de l'autre unité fonctionnelle électrique dans le canal de données ou **en ce que** le dispositif de commande est conçu de telle sorte qu'il publie les informations de l'unité fonctionnelle électrique dans le canal de données et l'autre dispositif de commande publie les informations de l'autre unité fonctionnelle électrique dans le canal de données.

4. Dispositif sous-marin selon la revendication 3, **caractérisé en ce que**
a. le dispositif de commande est conçu de telle sorte qu'il reçoit les informations de l'unité fonctionnelle électrique et/ou de l'autre unité fonctionnelle électrique en provenance du canal de données ou **en ce que**
b. le dispositif de commande est conçu de telle sorte qu'il reçoit les informations de l'unité fonctionnelle électrique en provenance du canal de données et l'autre dispositif de commande reçoit les informations de l'autre unité fonctionnelle électrique en provenance du canal de données.

5. Dispositif sous-marin (1) selon l'une quelconque des revendications 1 à 4, **caractérisé en ce que** le dispositif sous-marin (1) comprend une unité centrale qui est configurée pour gérer les informations publiées par l'unité fonctionnelle électrique et/ou par l'autre unité fonctionnelle électrique dans le canal de données.

6. Dispositif sous-marin (1) selon la revendication 5, **caractérisé en ce que**
a. l'unité centrale est conçue de telle sorte qu'elle est configurée pour transmettre les informations publiées dans le canal de données à des moyens de réception, lesquels sont abonnés au canal de données, et en particulier le dispositif de commande et/ou l'autre dispositif de commande comprend les moyens de réception et/ou **en ce que**
b. le dispositif de commande ou l'autre dispositif de commande comprend l'unité centrale.

7. Dispositif sous-marin (1) selon l'une quelconque des revendications 1 à 6, **caractérisé en ce que**
a. la première unité fonctionnelle électrique et l'autre unité fonctionnelle électrique sont directement reliées informatiquement au dispositif de commande, en particulier de manière libérable, lorsque le premier programme de commande et le second programme de commande sont exécutés sur le dispositif de commande et/ou **en ce que**
b. la liaison informatique est réalisée au moyen d'une connexion enfichable et/ou **en ce que**
c. l'unité fonctionnelle électrique est une unité d'imagerie, en particulier modulaire, permettant de générer une image du fond aquatique, en particulier et l'unité d'imagerie (4) comprend une caméra hyperspectrale (5) permettant des prises de vues du fond aquatique et/ou une caméra couleur (6), en particulier une caméra RVB, permettant des prises de vues du fond aquatique.

8. Dispositif sous-marin (1) selon l'une quelconque des revendications 1 à 7, **caractérisé en ce que**
a. le dispositif sous-marin (1) est conçu pour cartographier le fond aquatique en fonction des images enregistrées et/ou **en ce que**
b. l'unité fonctionnelle électrique est une unité de détermination de position (7), en particulier modulaire, permettant de déterminer une position du dispositif sous-marin (1) et/ou **en ce que**
c. l'unité fonctionnelle électrique est une unité de capteur, en particulier modulaire, laquelle comprend au moins un capteur(9), en particulier et le capteur (9) est relié informatiquement au dispositif de commande ou à l'autre dispositif de commande et/ou **en ce que**
d. l'unité fonctionnelle électrique est un dispositif d'affichage électrique permettant d'afficher l'état de fonctionnement du dispositif sous-marin.

9. Dispositif sous-marin (1) selon l'une quelconque des revendications 1 à 8, **caractérisé en ce que** l'unité fonctionnelle électrique est une unité de distribution d'énergie (14) permettant de distribuer l'énergie électrique entre une source d'énergie (10) électrique et un consommateur électrique.

10. Dispositif sous-marin (1) selon la revendication 9, **caractérisé en ce que** l'unité de distribution d'énergie (14) comprend au moins un autre capteur (11), lequel est relié informatiquement au dispositif de commande ou à l'autre dispositif de commande.

11. Dispositif sous-marin (1) selon la revendication 10, **caractérisé en ce que** le courant fourni au consommateur électrique ou la tension appliquée à la source d'énergie électrique (10) ou à l'unité d'acquisition de données peut être déterminé(e) au moyen du capteur (11).

12. Dispositif sous-marin (1) selon l'une quelconque des revendications 8c, 9 à 11, **caractérisé en ce que** la température ou l'humidité ou encore la pression à l'intérieur d'une cavité du dispositif sous-marin (1) peut être déterminée au moyen du capteur (9) et/ou de l'autre capteur (11).

13. Dispositif sous-marin (1) selon l'une quelconque des revendications 8c, 9 à 12, **caractérisé en ce que** le dispositif sous-marin (1) est conçu de telle sorte qu'il détermine, en fonction d'une valeur de capteur, la présente d'une situation de danger pour un consommateur électrique et l'unité de distribution d'énergie (14) isole le consommateur électrique de la source d'énergie électrique (10) en présence d'une situation de danger.

14. Dispositif sous-marin (1) selon l'une quelconque des revendications 1 à 13, **caractérisé par** la source d'énergie (10) électrique pour alimenter le consommateur électrique en énergie électrique, la source d'énergie (10) électrique
a. étant modulaire et/ou
b. comprenant un dispositif de commande de batterie (23) servant à surveiller l'état de la batterie et/ou
c. pouvant être reliée de manière amovible à un boîtier (26) du dispositif sous-marin (1).

15. Dispositif sous-marin (1) selon l'une quelconque des revendications 1 à 14, **caractérisé en ce que**
a. le dispositif sous-marin (1) est conçu de telle sorte qu'il peut être actionné et/ou commandé manuellement et/ou peut être portatif et/ou **en ce que**
b. le dispositif sous-marin (1) est conçu sans hélice et/ou **en ce que** le dispositif sous-marin (1) est un dispositif sous-marin pouvant être actionné par plongeur ou un véhicule sous-marin autonome ou un véhicule sous-marin guidé par câble.
